# EUROPEAN PATENT APPLICATION

(11) **EP 4 535 750 A1**
(43) Date of publication of application: **09.04.2025**
(21) Application number: 23834536.7
(22) Date of filing: 26.05.2023
(51) Int. Cl.: H04L 45/00

(54) **ROUTE PUBLISHING METHOD, AND COMMUNICATION METHOD AND APPARATUS**

(30) Priority: 07.07.2022 CN 202210804062; 15.07.2022 CN 202210837807
(71) Applicant: Huawei Technologies Co., Ltd., Shenzhen, Guangdong 518129 (CN)
(72) Inventor: CHEN, Xinjun, Shenzhen, Guangdong 518129 (CN); WANG, Haibo, Shenzhen, Guangdong 518129 (CN); XIE, Jingrong, Shenzhen, Guangdong 518129 (CN); DONG, Jie, Shenzhen, Guangdong 518129 (CN); ZHOU, Min, Shenzhen, Guangdong 518129 (CN)
(74) Representative: Goddar, Heinz J.
(86) International application number: PCT/CN2023/096476
(87) International publication number: WO 2024/007762

(57) **Abstract**

Embodiments of this application disclose a route advertisement method. A second communication apparatus may send a first BGP message to a third communication apparatus. The first BGP message includes a first routing prefix, a first next-hop address, and a first color attribute, and is used to advertise a first BGP route including the first routing prefix and the first next-hop address. An address segment of the first routing prefix is a first address segment of the second communication apparatus, and the first color attribute indicates a first service intent. The second communication apparatus may further advertise a first SRv6 service route to a first communication apparatus. The first SRv6 service route includes a first SRv6 SID, and the first SRv6 SID is an address in the first address segment. The second communication apparatus and the first communication apparatus belong to different domains. According to this solution, in an SRv6 inter-domain scenario, different target paths can be iterated to in domains based on service intents, and packet encapsulation overheads are low.

## Description

This application claims priorities to the following patent applications, which are incorporated herein by reference in their entireties:
1. Chinese Patent Application No. 202210804062.2, filed on July 7, 2022 and entitled "PACKET PROCESSING METHOD, COMMUNICATION METHOD, ROUTE ADVERTISEMENT METHOD, AND APPARATUS"; and
2. Chinese Patent Application No. 202210837807.5, filed with the China National Intellectual Property Administration on July 15, 2022 and entitled "ROUTE ADVERTISEMENT METHOD, COMMUNICATION METHOD, AND APPARATUS".

### TECHNICAL FIELD

This application relates to the communication field, and in particular, to a route advertisement method, a communication method, and an apparatus.

### BACKGROUND

With popularization of a segment routing (segment routing, SR) technology, a color attribute is introduced. A network node in a network may iterate to a corresponding path based on a color attribute, and transmit service data based on the path, to ensure a service level agreement (service level agreement, SLA) of a service.

The network such as a bearer network may include a plurality of network domains. When a transmission path of the service crosses a plurality of network domains, to iterate to a corresponding path based on a color attribute, an end-to-end path that corresponds to the color attribute and crosses the plurality of network domains needs to be deployed. If the end-to-end path that corresponds to the color attribute and crosses the plurality of network domains is not deployed, the path cannot be iterated to based on the color attribute. Consequently, the SLA of the service cannot be ensured.

Therefore, a solution is urgently required to resolve the foregoing problem.

### SUMMARY

Embodiments of this application provide a route advertisement method, a communication method, and an apparatus, to iterate to a path based on the color attribute when an end-to-end path that corresponds to a color attribute and that crosses a plurality of network domains is not deployed, to ensure an SLA of a service.

According to a first aspect, an embodiment of this application provides a route advertisement method. The method may be performed by a second communication apparatus. In an example, the second communication apparatus may send a first border gateway protocol (Border Gateway Protocol, BGP) message to a third communication apparatus. The first BGP message includes a first routing prefix, a first next-hop address, and a first color (color) attribute, and is used to advertise a first BGP route. The first BGP route includes the first routing prefix and the first next-hop address. A BGP route advertised by using a BGP message carrying a color attribute may also be referred to as a BGP intent route. An address segment of the first routing prefix is a first address segment of the second communication apparatus, and the first color attribute indicates a first service intent. For example, the first color attribute may carry a color value that indicates the first service intent. For example, for a color attribute, refer to related descriptions about a color extended community (color extended community) in the request for comments (request for comments, RFC) 9012. In addition, the second communication apparatus may further advertise a first segment routing internet protocol version 6 (Segment Routing Internet Protocol Version 6, SRv6) service route to a first communication apparatus. The first SRv6 service route includes a first SRv6 segment identifier (Segment identifier, SID), the first SRv6 SID is an address in the first address segment, and the second communication apparatus and the first communication apparatus belong to different domains. Because the first BGP message includes the first routing prefix, the first next-hop address, and the first color attribute, the third communication apparatus may iterate the first BGP route to a first target path based on the first next-hop address and the first color attribute. Further, because the first SRv6 SID is an address in the first address segment, the first SRv6 SID may match the first address segment. Correspondingly, the first BGP route may be iterated to based on the first SRv6 SID. Further, first forwarding information of the first target path to which the first BGP route is iterated may be determined, and a service packet is forwarded based on the first forwarding information. It can be learned that, in an example, according to this solution, an end-to-end path for transmitting a VPN service packet or an SFC service packet does not need to be deployed, and the first communication apparatus may iterate to the first BGP route based on the first SRv6 SID, to determine a transmission path in a network domain, so that the first target path in the domain is fully used to transmit a VPN service packet or a service function chaining (service function chaining, SFC) service packet. In addition, according to this solution, during encapsulation of a service packet, a plurality of SRv6 headers do not need to be encapsulated, and only one SRv6 header needs to be encapsulated to carry the first forwarding information and the first SRv6 SID. Packet encapsulation overheads are low, and the SRv6 header complies with the SRv6 basic specification.

In a possible implementation, a network domain or an area in embodiments of this application may correspond to an autonomous system (autonomous system, AS), or may correspond to an interior gateway protocol (Interior Gateway Protocol, IGP) domain.

In a possible implementation, if a VPN service is deployed on the second communication apparatus, the first SRv6 service route may be a first SRv6 VPN route, and correspondingly, the first SRv6 SID is a first SRv6 VPN SID.

In a possible implementation, the second communication apparatus further sends a second BGP message to the third communication apparatus. The second BGP message includes a second routing prefix, a second next-hop address, and a second color attribute, an address segment of the second routing prefix is a second address segment of the second communication apparatus, and the second color attribute indicates a second service intent. In addition, the second communication apparatus further advertises a second SRv6 service route to the first communication apparatus. The second SRv6 service route includes a second SRv6 SID, and the second SRv6 SID is an address in the second address segment. Because the second BGP message includes the second routing prefix, the second next-hop address, and the second color attribute, the third communication apparatus may iterate the second BGP route to a second target path based on the second next-hop address and the second color attribute. Further, because the second SRv6 SID is an address in the second address segment, the second SRv6 SID may match the second address segment. Correspondingly, the second BGP route may be iterated to based on the second SRv6 SID. Further, second forwarding information of the second target path to which the second BGP route is iterated may be determined, and a service packet is forwarded based on the second forwarding information. It can be learned that, in an example, according to this solution, an end-to-end path for transmitting a VPN service packet or an SFC service packet does not need to be deployed, and the first communication apparatus may iterate to the second BGP route based on the second SRv6 SID, to determine a transmission path in a network domain, so that the second target path in the domain is fully used to transmit a VPN service packet or an SFC service packet. In addition, according to this solution, during encapsulation of a service packet, a plurality of SRv6 headers do not need to be encapsulated, and only one SRv6 header needs to be encapsulated to carry the second forwarding information and the second SRv6 SID. Packet encapsulation overheads are low, and the SRv6 header complies with the SRv6 basic specification.

In a possible implementation, the second SRv6 service route is a second SRv6 VPN route, and the second SRv6 SID is a second SRv6 VPN SID.

In a possible implementation, a first SRv6 locator address segment of the second communication apparatus may be divided into a plurality of different address sub-segments, and the plurality of different address sub-segments include the first address segment. In an example, the plurality of address sub-segments may further include the second address segment. For example, the first SRv6 locator address segment may be divided based on service intents, and one service intent corresponds to one address sub-segment.

In a possible implementation, at least one SRv6 locator address segment may be configured for the second communication apparatus, and the first address segment is a first SRv6 locator address segment of the second communication apparatus. In an example, the second address segment is a second SRv6 locator address segment of the second communication apparatus.

In a possible implementation, the first communication apparatus belongs to a first domain, both the second communication apparatus and the third communication apparatus belong to a second domain, and the first communication apparatus is connected to the second communication apparatus through the third communication apparatus. That is, the second communication apparatus may advertise a BGP message (for example, the first BGP message or the second BGP message) to the third communication apparatus that belongs to the same domain as the second communication apparatus, and the second communication apparatus may advertise an SRv6 service route (for example, the first SRv6 service route or the second SRv6 service route) to the first communication apparatus that belongs to a domain different from that of the second communication apparatus, to transmit a corresponding service packet based on path planning in each domain.

In an example, the SRv6 SID in this application is an SRv6 service SID, and is used to associate a specific service behavior of a communication apparatus to which the SID is allocated. For example, an SRv6 SID may be an SRv6 virtual private network (virtual private network, VPN) SID, an SRv6 service (service) segment SID, or an SRv6 binding (binding) SID. The SRv6 VPN SID is used to associate a related operation of a VPN service. In an example, a type of the SRv6 VPN SID may be, for example, an END.D type, for example, End.DX4, End.DT4, End.DX6, End.DT6, End.DX2, End.DX2V, End.DT2U, and End.DT2M defined in RFC8986. The SRv6 service segment SID is used to associate a related operation of a service chain. In an example, a type of the SRv6 service segment SID may be, for example, an END.A type, for example, END.AN described in an internet engineering task force (Internet Engineering Task Force, IETF) draft draft-ietf-spring-sr-service-programming. The SRv6 binding SID is used to associate related operations such as tunnel binding. In an example, the SRv6 binding SID is, for example, a SID of an END.B type, for example, End.BM and END.B6 defined in RFC8986.

In an example, the first SRv6 SID may be a first SRv6 VPN SID, a first SRv6 service segment SID, or a first SRv6 binding SID of the second communication apparatus. For example, when the first packet is a VPN service packet, the first SRv6 SID is a first SRv6 VPN SID of the second communication apparatus.

According to a second aspect, an embodiment of this application provides a communication method. The method may be performed by a first communication apparatus. In an example, the first communication apparatus may receive a first BGP message. The first BGP message includes a first routing prefix, a first next-hop address, and a first color attribute, an address segment of the first routing prefix is a first address segment of a second communication apparatus, and the first color attribute indicates a first service intent. After receiving the first BGP message, the first communication apparatus may generate a first BGP route based on the first BGP message. The first BGP route includes the first routing prefix and the first next-hop address. The first communication apparatus iterates the first BGP route to a first target path based on the first color attribute and the first next-hop address. The first target path is used to forward a packet that carries a first SRv6 SID of the second communication apparatus, and the first SRv6 SID is an address in the first address segment. It can be learned that, according to this solution, after receiving the first BGP message, the first communication apparatus may iterate the first BGP route to the first target path based on the first color attribute and the first next-hop address that are carried in the first BGP message. In this way, after receiving a service packet, the first communication apparatus determines that the service packet corresponds to the first SRv6 SID. Because the first SRv6 SID is an address in the first address segment, the first SRv6 VPN SID may match the first routing prefix, so that first forwarding information of the first target path is determined based on the first SRv6 SID, and the service packet is forwarded based on the first forwarding information. That is, the service packet may be diverted to the first target path created based on the first service intent.

According to the solution provided in this application, in an SRv6 inter-domain scenario in which an end-to-end color intent tunnel (for example, an end-to-end SRv6 Policy) cannot be deployed, iterating to an intra-domain tunnel based on a color value is supported in each domain. Therefore, differentiated paths and tunnels in the domain can be fully used, and forwarding efficiency is improved. According to the solution of this application, not only a public network service can be iterated to an intra-domain tunnel in each domain based on a color value, but also a private network service such as a VPN can be iterated to an intra-domain tunnel in each domain based on a color value. This improves transmission quality of the private network service. In addition, according to the solution provided in this application, during data plane encapsulation, only one layer of SRv6 header needs to be encapsulated. This is compatible with a current SRv6 encapsulation standard. During encapsulation of a service packet, a plurality of SRv6 headers do not need to be encapsulated, and only one SRv6 header needs to be encapsulated to carry the first forwarding information and the first SRv6 SID. Packet encapsulation overheads are low, and the SRv6 header complies with the SRv6 basic specification.

In a possible implementation, the first SRv6 SID is a first SRv6 VPN SID. In this case, a service packet corresponding to a VPN service may be transmitted based on the first target path.

In a possible implementation, if the first communication apparatus is a head node for inter-domain forwarding, the first communication apparatus may further receive a first SRv6 service route advertised by the second communication apparatus. The first SRv6 service route includes the first SRv6 SID. After receiving the first SRv6 service route, the first communication apparatus may iterate to the first BGP route based on the first SRv6 SID because the first SRv6 SID is an address in the first address segment. Because the first BGP route is iterated to the first target path, after iterating the first BGP route based on the first SRv6 SID, the first communication apparatus may obtain the first forwarding information of the first target path. In a packet forwarding phase, the first communication apparatus may determine the first forwarding information based on the SRv6 SID, to further obtain, through encapsulation, a packet including the first SRv6 SID and the first forwarding information.

In a possible implementation, if the first communication apparatus is a head node for inter-domain forwarding, the first communication apparatus may further receive first information sent by a controller. The first information includes the first SRv6 SID. After receiving the first information, the first communication apparatus may iterate to the first BGP route based on the first SRv6 SID because the first SRv6 SID is an address in the first address segment. Because the first BGP route is iterated to the first target path, after iterating the first BGP route based on the first SRv6 SID, the first communication apparatus may obtain the first forwarding information of the first target path. In a packet forwarding phase, the first communication apparatus may determine the first forwarding information based on the SRv6 SID, to further obtain, through encapsulation, a packet including the first SRv6 SID and the first forwarding information.

In a possible implementation, after receiving the first BGP message, the first communication apparatus may obtain a second BGP message based on the first BGP message, where the second BGP message is used to advertise a second BGP route; and send the second BGP message to a third communication apparatus. In an example, next hop information in the second BGP message is modified to information about the first communication apparatus. In a specific example, the first communication apparatus may modify a first next hop, and modify the first next hop to a second next hop. The second next hop is an IP address of the first communication apparatus. In another example, color values corresponding to a same service intent are different for different domains. Therefore, the first communication apparatus may further modify the first color attribute to a second color attribute. The second color attribute indicates the first service intent in a domain of the third communication apparatus.

In a possible implementation, the second BGP message may indicate the third communication apparatus to iterate the second BGP route to a second target path based on the second color attribute and the second next-hop address. The second target path is used to forward a packet that carries the first SRv6 SID. In this case, for a packet that carries the first SRv6 SID, the packet may be forwarded between border nodes in two different domains, for example, between the third communication apparatus and the first communication apparatus, or may be forwarded based on the second target path that matches the second color attribute, to effectively ensure that a service intent can be met when the service packet is forwarded between border nodes in different domains.

In a possible implementation, the first communication apparatus may further receive a third BGP message, where the third BGP message includes a second routing prefix, a third next-hop address, and a third color attribute, an address segment of the second routing prefix is a second address segment of the second communication apparatus, and the third color attribute indicates a second service intent; generate a third BGP route based on the third BGP message, where the third BGP route includes the second routing prefix and the third next-hop address; and iterate the third BGP route to a third target path based on the third color attribute and the third next-hop address, where the third target path is used to forward a packet that carries a second SRv6 SID of the second communication apparatus, and the second SRv6 SID is an address in the second address segment. In this way, when the second communication apparatus is configured with services corresponding to different service intents, address segment division may be performed on the second communication apparatus. The first service intent corresponds to the first address segment, and the second service intent corresponds to the second address segment. In this way, the first communication apparatus can forward service data corresponding to the first service intent through the first target path, and forward service data corresponding to the second service intent through the third target path.

In a possible implementation, the second SRv6 SID is a second SRv6 VPN SID.

In a possible implementation, if the first communication apparatus is a head node for inter-domain forwarding, the first communication apparatus may further receive a second SRv6 VPN route advertised by the second communication apparatus, where the second SRv6 VPN route includes the second SRv6 VPN SID; and iterate the third BGP route based on the second SRv6 VPN SID, and obtain second forwarding information of the third target path. In a packet forwarding phase, the first communication apparatus may determine the second forwarding information based on the second SRv6 SID, to further encapsulate a packet including the second SRv6 SID and the second forwarding information, so as to forward the packet including the second SRv6 SID through the third target path.

In a possible implementation, if the first communication apparatus is a head node for inter-domain forwarding, the first communication apparatus may further receive second information sent by a controller. The second information includes the second SRv6 SID. After receiving the second information, the first communication apparatus may iterate to the third BGP route based on the second SRv6 SID because the second SRv6 SID is an address in the second address segment. Because the third BGP route is iterated to the third target path, after iterating the third BGP route based on the second SRv6 SID, the first communication apparatus may obtain the second forwarding information of the third target path. In a packet forwarding phase, the first communication apparatus may determine the second forwarding information based on the second SRv6 SID, to further encapsulate a packet including the second SRv6 SID and the second forwarding information, so as to forward the packet including the second SRv6 SID through the third target path.

In a possible implementation, the second SRv6 SID is a second SRv6 VPN SID, the second SRv6 SID is a second SRv6 service service segment segment SID, or the second SRv6 SID is a second SRv6 binding binding SID.

In a possible implementation, after receiving the third BGP message, the first communication apparatus may obtain a fourth BGP message based on the third BGP message, where the fourth BGP message is used to advertise a fourth BGP route; and send the fourth BGP message to the third communication apparatus. In an example, next hop information in the fourth BGP message is modified to information about the first communication apparatus. In a specific example, the first communication apparatus may modify the third next hop, and modify the third next hop to a fourth next hop. The fourth next hop is an IP address of the first communication apparatus. In another example, color values corresponding to a same service intent are different for different domains. Therefore, the first communication apparatus may further modify the third color attribute to a fourth color attribute. The fourth color attribute indicates the second service intent in the domain of the third communication apparatus.

In a possible implementation, the fourth BGP message may indicate the third communication apparatus to iterate the fourth BGP route to a fourth target path based on the fourth color attribute and the fourth next-hop address. The fourth target path is used to forward a packet that carries the second SRv6 SID. In this case, for a packet that carries the second SRv6 SID, the packet may be forwarded between border nodes in two different domains, that is, between the third communication apparatus and the first communication apparatus, or may be forwarded based on the fourth target path that matches the fourth color attribute, to effectively ensure that a service intent can be met when the service packet is forwarded between border nodes in different domains.

In a possible implementation, the address segment of the second routing prefix is an address segment allocated by the second communication apparatus based on the second service intent, and the second SRv6 SID is a SID allocated by the second communication apparatus based on the second service intent. In this case, an address segment may be allocated to the second communication apparatus based on a service intent, and an SRv6 SID may be allocated based on the service intent, so that service data with different service intents is forwarded through paths corresponding to the service intents.

In a possible implementation, a first SRv6 locator address segment of the second communication apparatus includes a plurality of different address sub-segments, and the plurality of different address sub-segments include the first address segment and the second address segment.

In a possible implementation, the first address segment is a first SRv6 locator address segment of the second communication apparatus, and the second address segment is a second SRv6 locator address segment of the second communication apparatus.

In a possible implementation, the first target path is one of the following: an SRSRv6 policy (policy), an SRv6 flexible algorithm (flexible algorithm, flex-algo) path, a resource reservation protocol traffic engineering (Resource ReSerVation Protocol traffic engineering, RSVP-TE) tunnel, an SR multi-protocol label switching (Multi-Protocol Label Switching, MPLS) policy, an SR flex-algo path, a virtual extensible local area network (virtual extensible local area network, VxLAN) tunnel, or an MPLS-TE tunnel. In this manner, a corresponding service packet may be transmitted based on path planning in each domain.

In a possible implementation, the address segment of the first routing prefix is an address segment allocated by the second communication apparatus based on the first service intent, and the first SRv6 SID is a SID allocated by the second communication apparatus based on the first service intent.

In a possible implementation, an SRv6 locator address segment of the second communication apparatus includes a plurality of different address sub-segments, and the plurality of different address sub-segments include the first address segment.

In a possible implementation, the first address segment is a first SRv6 locator address segment of the second communication apparatus.

In a possible implementation, the first communication apparatus may further receive a first packet, and determine the first SRv6 SID based on the first packet. After the first SRv6 SID is determined, the first forwarding information of the first target path may be determined based on the first SRv6 SID. After the first forwarding information is determined, the first packet may be processed based on the first SRv6 SID and the first forwarding information, to obtain a second packet whose packet header carries the first SRv6 SID and the first forwarding information. After obtaining the second packet based on the first packet, the first communication apparatus may send the second packet through the first target path. In an example, the first target path may be a part of an end-to-end path for transmitting a VPN service packet or an SFC service packet, for example, a transmission path in a network domain. It can be learned that, in this embodiment of this application, an end-to-end path for transmitting a VPN service packet or an SFC service packet does not need to be deployed, and the first communication apparatus may determine a transmission path in a network domain based on the first SRv6 SID determined based on a destination address of the first packet, to fully use the first target path in the domain to transmit the VPN service packet or the SFC service packet. In addition, according to this solution, during encapsulation of the first packet, a plurality of SRv6 headers do not need to be encapsulated, and only one SRv6 header needs to be encapsulated to carry the first SRv6 SID and the first forwarding information. Packet encapsulation overheads are low, and encapsulation of the SRv6 header complies with the SRv6 basic specification.

In a possible implementation, if the first communication apparatus is a head node for inter-domain forwarding, in an example, if the first packet is a packet corresponding to a VPN service, the first communication apparatus may receive the first packet through an interface corresponding to the VPN service. After receiving the first packet, the first communication apparatus may search a first VRF table corresponding to the interface for receiving the first packet, to obtain the first SRv6 SID.

In another example, if the first communication apparatus is an intermediate node for inter-domain forwarding, a destination address of the first packet may be the first SRv6 SID. In this case, the first communication apparatus may directly determine the destination address as the SRv6 SID.

In a possible implementation, when obtaining the first SRv6 SID, the first communication apparatus may directly obtain the first forwarding information.

In another possible implementation, after obtaining the first SRv6 SID, the first communication apparatus may further search a forwarding entry, to obtain the first forwarding information.

In a possible implementation, the first communication apparatus may further receive a third packet, and determine the second SRv6 SID based on the third packet; further, determine the second forwarding information of the third target path corresponding to the second SRv6 SID based on the second SRv6 SID; obtain a fourth packet based on the third packet, where a packet header of the fourth packet includes the second SRv6 SID and the second forwarding information; and send the fourth packet to the second communication apparatus through the third target path. In this case, in this embodiment of this application, a service packet corresponding to the first service intent may be transmitted through the first target path, and a service packet corresponding to the second service intent may be transmitted through the third target path.

In a possible implementation, the second SRv6 SID is a second SRv6 VPN SID, and the determining the second SRv6 SID based on the third packet includes: searching a second virtual routing and forwarding VRF table based on a destination address of the third packet, to determine the second VPN SRv6 SID.

In a possible implementation, the destination address of the third packet is the second SRv6 SID.

In a possible implementation, the first communication apparatus belongs to a first domain, the second communication apparatus belongs to a second domain, and the first communication apparatus is connected to the second communication apparatus through a third communication apparatus. When the first communication apparatus forwards the second packet through the first target path, for example, may forward the second packet to the third communication apparatus. In other words, the first target path may be a group forwarding path in a domain to which the first communication apparatus belongs. The first communication apparatus and the third communication apparatus are respectively a head node and an egress node of the first target path. In this manner, the first target path in the domain to which the first communication apparatus belongs may be fully used to transmit a service packet.

In a possible implementation, the first communication apparatus may further receive a fifth packet; determine the third SRv6 SID based on the fifth packet, where the third SRv6 SID is an SRv6 SID of a fourth communication apparatus, the third SRv6 SID is an address in the first address segment, and the fourth communication apparatus and the second communication apparatus belong to a same domain; determine the first forwarding information of the first target path corresponding to the third SRv6 SID based on the third SRv6 SID; obtain a sixth packet based on the fifth packet, where a packet header of the sixth packet includes the third SRv6 SID and the first forwarding information; and send the sixth packet through the first target path. In this case, the first address segment may be an address segment in a domain in which the second communication apparatus is located. In an example, an egress node of the first target path may be a border node of the domain in which the second communication apparatus is located. After the sixth packet is forwarded to a border node of the domain in which the second communication apparatus is located, the border node may continue to forward the sixth packet to the fourth communication apparatus through a corresponding forwarding path in the domain.

According to a third aspect, an embodiment of this application provides a packet processing method, and the method may be performed by a first communication apparatus. In an example, the first communication apparatus may receive a first packet, and determine a first SRv6 SID based on the first packet. After the first SRv6 SID is determined, first forwarding information of a first target path may be determined based on the first SRv6 SID. After the first forwarding information is determined, the first packet may be processed based on the first SRv6 SID and the first forwarding information, to obtain a second packet whose packet header carries the first SRv6 SID and the first forwarding information. After obtaining the second packet based on the first packet, the first communication apparatus may send the second packet through the first target path. In an example, the first target path may be a part of an end-to-end path for transmitting a VPN service packet or an SFC service packet, for example, a transmission path in a network domain. It can be learned that, in this embodiment of this application, an end-to-end path for transmitting a VPN service packet or an SFC service packet does not need to be deployed, and the first communication apparatus may determine a transmission path in a network domain based on the first SRv6 SID determined based on a destination address of the first packet, to fully use the first target path in the domain to transmit the VPN service packet or the SFC service packet. In addition, according to this solution, during encapsulation of the first packet, a plurality of SRv6 headers do not need to be encapsulated, and only one SRv6 header needs to be encapsulated to carry the first SRv6 SID and the first forwarding information. Packet encapsulation overheads are low.

In a possible implementation, the first SRv6 SID is a first SRv6 VPN SID of a second communication apparatus.

In a possible implementation, the determining a first SRv6 SID based on the first packet includes: searching a first virtual routing and forwarding VRF table based on the destination address of the first packet, to determine the first SRv6 VPN SID.

In a possible implementation, the destination address of the first packet is the first SRv6 SID.

In a possible implementation, an SRv6 locator address segment of the second communication apparatus includes a plurality of different address sub-segments, and the plurality of different address sub-segments include a first address segment.

In a possible implementation, the first address segment is a first SRv6 locator address segment of the second communication apparatus.

In a possible implementation, the method further includes: receiving a third packet; determining a second SRv6 SID based on the third packet, where the second SRv6 SID is an SRv6 SID of the second communication apparatus; determining second forwarding information of a second target path corresponding to the second SRv6 SID based on the second SRv6 SID; obtaining a fourth packet based on the third packet, where a packet header of the fourth packet includes the second SRv6 SID and the second forwarding information; and sending the fourth packet to the second communication apparatus through the second target path.

In a possible implementation, the second SRv6 SID is a second SRv6 VPN SID of the second communication apparatus.

In a possible implementation, the determining a second SRv6 SID based on the third packet includes: searching a second virtual routing and forwarding VRF table based on a destination address of the third packet, to determine the second SRv6 SID.

In a possible implementation, the destination address of the third packet is the second SRv6 SID.

In a possible implementation, an SRv6 locator address segment of the second communication apparatus includes a plurality of different address sub-segments, and the plurality of different address sub-segments include a second address segment and the first address segment.

In a possible implementation, the second address segment is a second SRv6 locator address segment of the second communication apparatus, and the first address segment is a first SRv6 locator address segment of the second communication apparatus.

In a possible implementation, a second BGP route is a second border gateway protocol internet protocol version 6 unicast BGP IPv6 unicast route.

In a possible implementation, the method further includes: before receiving the third packet, receiving a third BGP message, where the third BGP message includes a second routing prefix, a third next-hop address, and a third color attribute, an address segment of the second routing prefix is the second address segment of the second communication apparatus, and the third color attribute indicates a second service intent; generating a third BGP route based on the third BGP message, where the third BGP route includes the second routing prefix and the third next-hop address; and iterating the third BGP route to a third target path based on the third color attribute and the third next-hop address, where the third target path is used to forward a packet that carries the second SRv6 SID of the second communication apparatus, and the second SRv6 SID is an address in the second address segment. In a possible implementation, the first communication apparatus belongs to a first domain, the second communication apparatus belongs to a second domain, and the first communication apparatus is connected to the second communication apparatus through a third communication apparatus. The first communication apparatus and the third communication apparatus are respectively a head node and an egress node of the first target path.

In a possible implementation, the method further includes: receiving a fifth packet; determining a third SRv6 SID based on the fifth packet, where the third SRv6 SID is an SRv6 SID of a fourth communication apparatus, the third SRv6 SID is an address in the first address segment, and the fourth communication apparatus and the second communication apparatus belong to a same domain; determining the first forwarding information of the first target path corresponding to the third SRv6 SID based on the third SRv6 SID; obtaining a sixth packet based on the fifth packet, where a packet header of the sixth packet includes the third SRv6 SID and the first forwarding information; and sending the sixth packet through the first target path.

In a possible implementation, the third SRv6 SID is a third SRv6 VPN SID of the fourth communication apparatus.

In a possible implementation, the method further includes: before receiving the first packet, receiving a first BGP message, where the first BGP message includes a first routing prefix, a first next-hop address, and a first color attribute, and the first color attribute indicates a first service intent; generating a first BGP route based on the first BGP message; and iterating the first BGP route to the first target path based on the first color attribute and the first next-hop address.

In a possible implementation, the first color attribute includes first indication information, and the first indication information indicates the first communication apparatus to automatically iterate to the first target path based on the first BGP route.

In a possible implementation, the first BGP route is a first border gateway protocol internet protocol version 6 unicast BGP IPv6 unicast route.

In a possible implementation, the first communication apparatus and the second communication apparatus belong to a same domain, and the method further includes: sending a second BGP message to the third communication apparatus, to advertise the second BGP route, where the second BGP message includes the first routing prefix, a second next-hop address, and a second color attribute, the second next-hop address is an IP address of the first communication apparatus, and the second color attribute indicates the first service intent.

In a possible implementation, the first SRv6 SID is a SID allocated based on the first service intent.

According to a fourth aspect, an embodiment of this application provides a second communication apparatus. The apparatus includes a transceiver unit and a processing unit. The transceiver unit is configured to perform a receiving operation and/or a sending operation performed by the second communication apparatus according to any one of the first aspect, and the processing unit is configured to perform an operation other than the receiving operation and/or the sending operation performed by the second communication apparatus according to any one of the first aspect.

In a specific example, the second communication apparatus includes a sending unit, configured to send a first border gateway protocol BGP message to a third communication apparatus. The first BGP message includes a first routing prefix, a first next-hop address, and a first color attribute, an address segment of the first routing prefix is a first address segment of the second communication apparatus, and the first color attribute indicates a first service intent. The sending unit is further configured to advertise a first segment routing internet protocol version 6 SRv6 service route to a first communication apparatus. The first SRv6 service route includes a first SRv6 segment identifier SID of the second communication apparatus, the first SRv6 SID is an address in the first address segment, and the second communication apparatus and the first communication apparatus belong to different domains.

In a possible implementation, the first SRv6 service route is a first SRv6 virtual private network VPN route, and the first SRv6 SID is a first SRv6 VPN SID.

In a possible implementation, the sending unit is further configured to: send a second BGP message to the third communication apparatus, where the second BGP message includes a second routing prefix, a second next-hop address, and a second color attribute, an address segment of the second routing prefix is a second address segment of the second communication apparatus, and the second color attribute indicates a second service intent; and advertise a second SRv6 service route to the first communication apparatus, where the second SRv6 service route includes a second SRv6 SID, and the second SRv6 SID is an address in the second address segment.

In a possible implementation, the second SRv6 service route is a second SRv6 VPN route, and the second SRv6 SID is a second SRv6 VPN SID.

In a possible implementation, a first SRv6 locator address segment of the second communication apparatus includes a plurality of different address sub-segments, and the plurality of different address sub-segments include the first address segment and the second address segment.

In a possible implementation, the first address segment is a first SRv6 locator address segment of the second communication apparatus, and the second address segment is a second SRv6 locator address segment of the second communication apparatus.

In a possible implementation, an SRv6 locator address segment of the second communication apparatus includes a plurality of different address sub-segments, and the plurality of different address sub-segments include the first address segment.

In a possible implementation, the first address segment is a first SRv6 locator address segment of the second communication apparatus.

In a possible implementation, the first communication apparatus belongs to a first domain, both the second communication apparatus and the third communication apparatus belong to a second domain, and the first communication apparatus is connected to the second communication apparatus through the third communication apparatus.

According to a fifth aspect, an embodiment of this application provides a first communication apparatus. The apparatus includes a transceiver unit and a processing unit. The transceiver unit is configured to perform a receiving operation and/or a sending operation performed by the first communication apparatus according to the second aspect, and the processing unit is configured to perform an operation other than the receiving operation and/or the sending operation performed by the first communication apparatus according to the second aspect. Alternatively, the transceiver unit is configured to perform the receiving operation and/or the sending operation performed by the first communication apparatus according to the third aspect, and the processing unit is configured to perform an operation other than the receiving and/or the sending operation performed by the first communication apparatus according to the third aspect.

In a specific example, the first communication apparatus includes a receiving unit and a processing unit.

The receiving unit is configured to receive a first border gateway protocol BGP message, where the first BGP message includes a first routing prefix, a first next-hop address, and a first color attribute, an address segment of the first routing prefix is a first address segment of a second communication apparatus, and the first color attribute indicates a first service intent. The processing unit is configured to generate a first BGP route based on the first BGP message, where the first BGP route includes the first routing prefix and the first next-hop address. The processing unit is further configured to iterate the first BGP route to a first target path based on the first color attribute and the first next-hop address, where the first target path is used to forward a packet that carries a first segment routing internet protocol version 6 SRv6 segment identifier SID of the second communication apparatus, and the first SRv6 SID is an address in the first address segment.

In a possible implementation, the first SRv6 SID is a first SRv6 virtual private network VPN SID.

In a possible implementation, the receiving unit is further configured to receive a first SRv6 service route, where the first SRv6 service route includes the first SRv6 SID. The processing unit is further configured to iterate the first BGP route based on the first SRv6 SID, and obtain first forwarding information of the first target path.

In a possible implementation, the receiving unit is further configured to receive first information sent by a controller, where the first information includes the first SRv6 SID. The processing unit is further configured to iterate the first BGP route based on the first SRv6 SID, and obtain first forwarding information of the first target path.

In a possible implementation, the first SRv6 SID is a first SRv6 VPN SID, the first SRv6 SID is a first SRv6 service service segment segment SID or the first SRv6 SID is a first SRv6 binding binding SID.

In a possible implementation, the apparatus further includes: a sending unit, configured to send a second BGP message to a third communication apparatus, to advertise a second BGP route. The second BGP message includes the first routing prefix, a second next-hop address, and a second color attribute, the second next-hop address is an IP address of the first communication apparatus, and the second color attribute indicates the first service intent.

In a possible implementation, the second BGP message indicates the third communication apparatus to iterate the second BGP route to a second target path based on the second color attribute and the second next-hop address. The second target path is used to forward a packet that carries the first SRv6 SID.

In a possible implementation, the receiving unit is further configured to receive a third BGP message, where the third BGP message includes a second routing prefix, a third next-hop address, and a third color attribute, an address segment of the second routing prefix is a second address segment of the second communication apparatus, and the third color attribute indicates a second service intent. The processing unit is further configured to generate a third BGP route based on the third BGP message, where the third BGP route includes the second routing prefix and the third next-hop address. The processing unit is further configured to iterate the third BGP route to a third target path based on the third color attribute and the third next-hop address, where the third target path is used to forward a packet that carries a second SRv6 SID of the second communication apparatus, and the second SRv6 SID is an address in the second address segment.

In a possible implementation, the second SRv6 SID is a second SRv6 VPN SID.

In a possible implementation, the receiving unit is further configured to receive a second SRv6 VPN route advertised by the second communication apparatus, where the second SRv6 VPN route includes the second SRv6 VPN SID. The processing unit is further configured to iterate the third BGP route based on the second SRv6 VPN SID, and obtain second forwarding information of the third target path.

In a possible implementation, the receiving unit is further configured to receive second information sent by the controller, where the second information includes the second SRv6 SID. The processing unit is further configured to iterate the third BGP route based on the second SRv6 SID, and obtain second forwarding information of the third target path.

In a possible implementation, the second SRv6 SID is a second SRv6 VPN SID, the second SRv6 SID is a second SRv6 service service segment segment SID, or the second SRv6 SID is a second SRv6 binding binding SID.

In a possible implementation, the apparatus further includes: a sending unit, configured to send a fourth BGP message to the third communication apparatus, to advertise a fourth BGP route. The fourth BGP message includes the second routing prefix, a fourth next-hop address, and a fourth color attribute, the fourth next-hop address is the IP address of the first communication apparatus, and the fourth color attribute indicates the second service intent.

In a possible implementation, the fourth BGP message indicates the third communication apparatus to iterate the fourth BGP route to a fourth target path based on the fourth color attribute and the fourth next-hop address. The fourth target path is used to forward a packet that carries the second SRv6 SID.

In a possible implementation, the address segment of the second routing prefix is an address segment allocated by the second communication apparatus based on the second service intent, and the second SRv6 SID is a SID allocated by the second communication apparatus based on the second service intent.

In a possible implementation, a first SRv6 locator address segment of the second communication apparatus includes a plurality of different address sub-segments, and the plurality of different address sub-segments include the first address segment and the second address segment.

In a possible implementation, the first address segment is a first SRv6 locator address segment of the second communication apparatus, and the second address segment is a second SRv6 locator address segment of the second communication apparatus.

In a possible implementation, the first target path is one of the following: a segment routing SR internet protocol version 6 policy SRv6 policy, a segment routing internet protocol version 6 flexible algorithm SRv6 flex-algo path, a resource reservation protocol traffic engineering RSVP-TE tunnel, a segment routing multi-protocol label switching policy SR MPLS policy, an SR flex-algo path, a virtual extensible local area network VxLAN tunnel, or a multi-protocol label switching traffic engineering MPLS-TE tunnel.

In a possible implementation, the address segment of the first routing prefix is an address segment allocated by the second communication apparatus based on the first service intent, and the first SRv6 SID is a SID allocated by the second communication apparatus based on the first service intent.

In a possible implementation, an SRv6 locator address segment of the second communication apparatus includes a plurality of different address sub-segments, and the plurality of different address sub-segments include the first address segment.

In a possible implementation, the first address segment is a first SRv6 locator address segment of the second communication apparatus.

In a possible implementation, the receiving unit is further configured to receive a first packet. The processing unit is further configured to: determine the first SRv6 SID based on the first packet; determine the first forwarding information of the first target path based on the first SRv6 SID; and obtain a second packet based on the first packet, where a packet header of the second packet includes the first SRv6 SID and the first forwarding information. The sending unit included in the apparatus is configured to send the second packet through the first target path.

In a possible implementation, the first SRv6 SID is a first SRv6 VPN SID, and the determining a first segment routing internet protocol version 6 segment identifier SRv6 SID based on the first packet includes: searching a first virtual routing and forwarding VRF table based on a destination address of the first packet, to determine the first SRv6 VPN SID.

In a possible implementation, the destination address of the first packet is the first SRv6 SID.

In a possible implementation, the receiving unit is further configured to receive a third packet. The processing unit is further configured to: determine the second SRv6 SID based on the third packet; determine the second forwarding information of the third target path corresponding to the second SRv6 SID based on the second SRv6 SID; and obtain a fourth packet based on the third packet, where a packet header of the fourth packet includes the second SRv6 SID and the second forwarding information. The sending unit included in the apparatus is configured to send the fourth packet to the second communication apparatus through the third target path.

In a possible implementation, the second SRv6 SID is a second SRv6 VPN SID, and the determining the second SRv6 SID based on the third packet includes: searching a second virtual routing and forwarding VRF table based on a destination address of the third packet, to determine the second VPN SRv6 SID.

In a possible implementation, the destination address of the third packet is the second SRv6 SID.

In a possible implementation, the first communication apparatus belongs to a first domain, the second communication apparatus belongs to a second domain, the first communication apparatus is connected to the second communication apparatus through a third communication apparatus, and the first communication apparatus and the third communication apparatus are respectively a head node and an egress node of the first target path.

In a possible implementation, the receiving unit is configured to receive a fifth packet. The processing unit is configured to: determine the third SRv6 SID based on the fifth packet, where the third SRv6 SID is an SRv6 SID of a fourth communication apparatus, the third SRv6 SID is an address in the first address segment, and the fourth communication apparatus and the second communication apparatus belong to a same domain; determine the first forwarding information of the first target path corresponding to the third SRv6 SID based on the third SRv6 SID; and obtain a sixth packet based on the fifth packet, where a packet header of the sixth packet includes the third SRv6 SID and the first forwarding information. The sending unit included in the apparatus is configured to send the sixth packet through the first target path.

In another specific example, the first communication apparatus includes a receiving unit, a processing unit, and a sending unit.

The receiving unit is configured to receive a first packet. The processing unit is configured to: determine a first SRv6 SID based on the first packet; determine first forwarding information of a first target path based on the first SRv6 SID; and obtain a second packet based on the first packet, where a packet header of the second packet includes the first SRv6 SID and the first forwarding information. The sending unit is configured to send the second packet through the first target path.

In a possible implementation, the first SRv6 SID is a first SRv6 VPN SID of the second communication apparatus.

In a possible implementation, the determining a first SRv6 SID based on the first packet includes: searching a first virtual routing and forwarding VRF table based on a destination address of the first packet, to determine the first SRv6 VPN SID.

In a possible implementation, the destination address of the first packet is the first SRv6 SID.

In a possible implementation, an SRv6 locator address segment of the second communication apparatus includes a plurality of different address sub-segments, and the plurality of different address sub-segments include a first address segment.

In a possible implementation, the first address segment is a first SRv6 locator address segment of the second communication apparatus.

In a possible implementation, the receiving unit is further configured to receive a third packet. The processing unit is further configured to: determine a second SRv6 SID based on the third packet, where the second SRv6 SID is an SRv6 SID of the second communication apparatus; determine second forwarding information of a second target path corresponding to the second SRv6 SID based on the second SRv6 SID; and obtain a fourth packet based on the third packet, where a packet header of the fourth packet includes the second SRv6 SID and the second forwarding information. The sending unit is further configured to send the fourth packet to the second communication apparatus through the second target path.

In a possible implementation, the second SRv6 SID is a second SRv6 VPN SID of the second communication apparatus.

In a possible implementation, the determining a second SRv6 SID based on the third packet includes: searching a second virtual routing and forwarding VRF table based on a destination address of the third packet, to determine the second SRv6 SID.

In a possible implementation, the destination address of the third packet is the second SRv6 SID.

In a possible implementation, an SRv6 locator address segment of the second communication apparatus includes a plurality of different address sub-segments, and the plurality of different address sub-segments include a second address segment and the first address segment.

In a possible implementation, the second address segment is a second SRv6 locator address segment of the second communication apparatus, and the first address segment is a first SRv6 locator address segment of the second communication apparatus.

In a possible implementation, a second BGP route is a second border gateway protocol internet protocol version 6 unicast BGP IPv6 unicast route.

In a possible implementation, before receiving the third packet, the receiving unit is further configured to receive a third BGP message, where the third BGP message includes a second routing prefix, a third next-hop address, and a third color attribute, an address segment of the second routing prefix is a second address segment of the second communication apparatus, and the third color attribute indicates a second service intent. The processing unit is further configured to generate a third BGP route based on the third BGP message, where the third BGP route includes the second routing prefix and the third next-hop address; and iterate the third BGP route to a third target path based on the third color attribute and the third next-hop address, where the third target path is used to forward a packet that carries the second SRv6 SID of the second communication apparatus, and the second SRv6 SID is an address in the second address segment.

In a possible implementation, the first communication apparatus belongs to a first domain, the second communication apparatus belongs to a second domain, the first communication apparatus is connected to the second communication apparatus through a third communication apparatus, and the first communication apparatus and the third communication apparatus are respectively a head node and an egress node of the first target path.

In a possible implementation, the receiving unit is further configured to receive a fifth packet. The processing unit is further configured to: determine a third SRv6 SID based on the fifth packet, where the third SRv6 SID is an SRv6 SID of a fourth communication apparatus, the third SRv6 SID is an address in the first address segment, and the fourth communication apparatus and the second communication apparatus belong to a same domain; determine the first forwarding information of the first target path corresponding to the third SRv6 SID based on the third SRv6 SID; and obtain a sixth packet based on the fifth packet, where a packet header of the sixth packet includes the third SRv6 SID and the first forwarding information. The sending unit is further configured to send the sixth packet through the first target path.

In a possible implementation, the third SRv6 SID is a third SRv6 VPN SID of the fourth communication apparatus.

In a possible implementation, before receiving the first packet, the receiving unit is further configured to: receive a first BGP message, where the first BGP message includes a first routing prefix, a first next-hop address, and a first color attribute, and the first color attribute indicates a first service intent. The processing unit is further configured to: generate a first BGP route based on the first BGP message; and iterate the first BGP route to the first target path based on the first color attribute and the first next-hop address.

In a possible implementation, the first color attribute includes first indication information, and the first indication information indicates the first communication apparatus to automatically iterate to the first target path based on the first BGP route.

In a possible implementation, the first BGP route is a first border gateway protocol internet protocol version 6 unicast BGP IPv6 unicast route.

In a possible implementation, the first communication apparatus and the second communication apparatus belong to a same domain. The sending unit is further configured to send a second BGP message to the third communication apparatus, to advertise the second BGP route, where the second BGP message includes the first routing prefix, a second next-hop address, and a second color attribute, the second next-hop address is an IP address of the first communication apparatus, and the second color attribute indicates the first service intent.

In a possible implementation, the first SRv6 SID is a SID allocated based on the first service intent.

According to a sixth aspect, an embodiment of this application provides a communication apparatus, including a processor and a memory.

The memory is configured to store instructions. The processor is configured to execute the instructions, so that the communication apparatus performs the method according to any one of the first aspect, the second aspect, or the third aspect.

According to a seventh aspect, an embodiment of this application provides a computer-readable storage medium, including instructions or a computer program. When the instructions or the computer program is run on a computer, the computer is enabled to perform the method according to any one of the first aspect, the second aspect, or the third aspect.

According to an eighth aspect, an embodiment of this application provides a computer program product, including the computer program product. When the computer program product runs on a processor, the method according to any one of the first aspect and the possible implementations of the first aspect is performed, or the method according to any one of the second aspect and the possible implementations of the second aspect is performed, or the method according to any one of the third aspect and the possible implementations of the third aspect is performed.

According to a ninth aspect, an embodiment of this application provides a communication system. The communication system includes a second communication apparatus that performs the method according to any one of the first aspect and the possible implementations of the first aspect and a first communication apparatus that performs the method according to any one of the second aspect and the possible implementations of the second aspect, or a second communication apparatus that performs the method according to any one of the first aspect and the possible implementations of the first aspect and a first communication apparatus that performs the method according to any one of the third aspect and the possible implementations of the third aspect.

### BRIEF DESCRIPTION OF DRAWINGS

To describe the technical solutions in embodiments of this application or the conventional technology more clearly, the following briefly describes the accompanying drawings for describing the embodiments or the conventional technology. It is clear that, the accompanying drawings in the following description show only some embodiments recorded in this application, and a person of ordinary skill in the art may still derive other drawings from these accompanying drawings without creative efforts.
FIG. 1a is a schematic diagram of an example application scenario according to an embodiment of this application;
FIG. 1b is a schematic diagram of another example application scenario according to an embodiment of this application;
FIG. 2a is a schematic diagram of an example application scenario according to an embodiment of this application;
FIG. 2b is a schematic diagram of another example application scenario according to an embodiment of this application;
FIG. 3 is a schematic flowchart of a route advertisement method according to an embodiment of this application;
FIG. 4 is a schematic flowchart of another route advertisement method according to an embodiment of this application;
FIG. 5 is a schematic flowchart of a communication method according to an embodiment of this application;
FIG. 6 is a schematic diagram of a structure of a color attribute according to an embodiment of this application;
FIG. 7 is a schematic flowchart of a packet forwarding method according to an embodiment of this application;
FIG. 8 is a schematic diagram of an example application scenario according to an embodiment of this application;
FIG. 9 is a schematic flowchart of another communication method according to an embodiment of this application;
FIG. 10 is a schematic flowchart of a packet processing method according to an embodiment of this application;
FIG. 11 is a schematic flowchart of another packet processing method according to an embodiment of this application;
FIG. 12a is a schematic diagram of an example application scenario according to an embodiment of this application;
FIG. 12b is a schematic diagram of another example application scenario according to an embodiment of this application;
FIG. 13 is a schematic diagram of a structure of a first communication apparatus according to an embodiment of this application;
FIG. 14 is a schematic diagram of a structure of a communication apparatus according to an embodiment of this application; and
FIG. 15 is a schematic diagram of a structure of a communication apparatus according to an embodiment of this application.

### DESCRIPTION OF EMBODIMENTS

Embodiments of this application provide a route advertisement method, a communication method, a packet forwarding method, and an apparatus, to iterate to a path based on the color attribute when an end-to-end path that corresponds to a color attribute and crosses a plurality of network domains is not established, to ensure an SLA of a service.

For ease of understanding, a possible application scenario of embodiments of this application is first described.

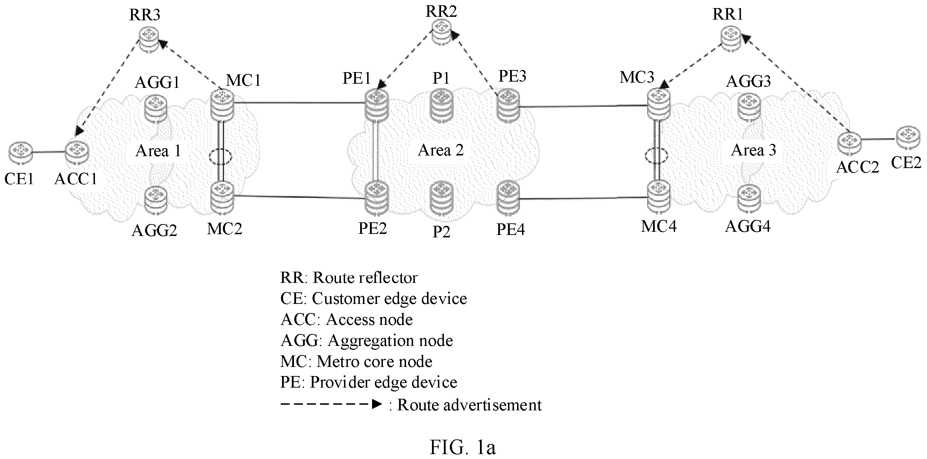

FIG. 1a is a schematic diagram of an example application scenario according to an embodiment of this application.

Refer to FIG. 1a. A customer edge device (customer edge, CE) 1 may communicate with a CE2 through an area 1, an area 2, and an area 3.

The area 1 includes an access node ACC1, aggregation nodes AGG1 and AGG2, and metro core nodes MC1 and MC2. The area 2 includes a provider edge device (provider edge, PE) 1, a PE2, a PE3, a PE4, a P1, and a P2. The area 3 includes an MC3, an MC4, an AGG3, an AGG4, and an ACC2.

In an example, the area 1, the area 2, and the area 3 may correspond to three autonomous systems (autonomous system, AS).

In an example, the area 1 may include two IGP domains. One IGP domain includes the ACC1, the AGG1, and the AGG2, and the other IGP domain includes the AGG1, the AGG2, the MC1, and the MC2. The AGG1 and the AGG2 are inter-domain devices in the two IGP domains.

In an example, the area 3 may include two IGP domains. One IGP domain includes the MC3, the MC4, the AGG3, and the AGG4, and the other IGP domain includes the AGG3, the AGG4, and the ACC2. The AGG3 and the AGG4 are inter-domain devices in the two IGP domains.

In an example, the ACC2 may advertise a VPN route to the ACC1. The VPN route may include a routing prefix, a next hop, a VPN SID, and a color attribute. For example, in the scenario shown in FIG. 1a, the ACC2 may advertise the VPN route to the MC3 through an RR1, and the MC3 further advertises the VPN route to the PE3. After receiving the VPN route, the PE3 advertises the VPN route to the PE1 through an RR2, and the PE1 further advertises the VPN route to the MC1. The MCI may further advertise the VPN route to the ACC1 through an RR3. In the process of advertising the VPN route, an intermediate node (for example, the MC3, the PE3, the PE1, and the MC1) does not modify the VPN route, and does not perform another operation based on the VPN route, but directly advertises the VPN route.

After receiving the VPN route advertised by the ACC2, the ACC1 may obtain, through iteration based on the color attribute and the next hop in the VPN route, a traffic engineering (traffic engineering, TE) tunnel that is to the next hop and matches the color attribute. Correspondingly, when receiving a service packet from the CE1, the ACC1 searches a virtual routing and forwarding (virtual routing and forwarding, VRF) table based on a destination IP address of the service packet to obtain a corresponding VPN SID, encapsulates an SRv6 packet based on a TE tunnel corresponding to the VPN SID, and forwards the SRv6 packet to the ACC2. In this way, a service packet of a VPN service is forwarded based on a TE tunnel corresponding to a color attribute.

However, a prerequisite for implementing the foregoing solution is that an end-to-end TE tunnel between the ACC1 and the ACC2 needs to be deployed. It is not difficult to understand that, as shown in FIG. 1a, the ACC1 and the ACC2 span a plurality of network domains. In this case, costs for deploying an end-to-end TE path crossing a plurality of networks are high.

To resolve the foregoing problem, the inventor of this application finds that a color attribute may be carried in a public network route advertised by the ACC2. For example, in the scenario shown in FIG. 1a, the ACC2 may advertise, to the ACC1, a public network route carrying a color attribute. For example, the ACC2 may first advertise the public network route to the MC3. After receiving the public network route advertised by the ACC2, the MC3 may obtain a TE path to the next hop through iteration based on the color attribute and a next hop in the public network route. In addition, the MC3 may further modify related information of the next hop in the public network route. Specifically, the MC3 may modify the next hop in the public network route to an address of the MC3. Further, the MC3 may advertise the modified public network route to the PE3. After receiving the public network route, the PE3 performs similar operations as the MC3 until the public network route carrying the color attribute is advertised to the ACC1. In this case,
when receiving a service packet from the CE1, the ACC1 searches a corresponding forwarding entry to obtain a TE tunnel from the ACC1 to the MC1, encapsulates the packet, and forwards the encapsulated packet to the MC1. After the MC1 forwards the packet to the PE1, the PE1 may search a corresponding forwarding entry to obtain a TE tunnel from the PE1 to the PE3, encapsulate the packet, and forward the encapsulated packet to the PE3, and so on until the packet is forwarded to the CE2.

However, in the foregoing solution, although an end-to-end TE tunnel from the ACC1 to the ACC2 does not need to be deployed, the foregoing solution supports processing of only a public network IPv6 service, and does not support currently widely used VPN services or SFC services.

To resolve the foregoing problem, the inventor of this application further finds that, in another example, a new BGP address family may be extended, and the ACC2 advertises, to the ACC1 by using the new BGP address family, a BGP route carrying a color attribute (referred to as a new BGP route for short). The new BGP route further includes an SRv6 SID corresponding to the new BGP route, so that a new end-to-end BGP tunnel from the ACC1 to the ACC2 is formed. In a process of advertising the new BGP route, edge nodes (for example, the MC3, the PE3, the PE1, and the MC1) of each area may obtain a tunnel to a corresponding next hop through iteration based on a next hop and a color attribute of the received new BGP route. In addition, the ACC2 may further advertise a VPN route to the ACC1. For an advertisement manner of the VPN route, refer to the foregoing related descriptions. Details are not described herein again.

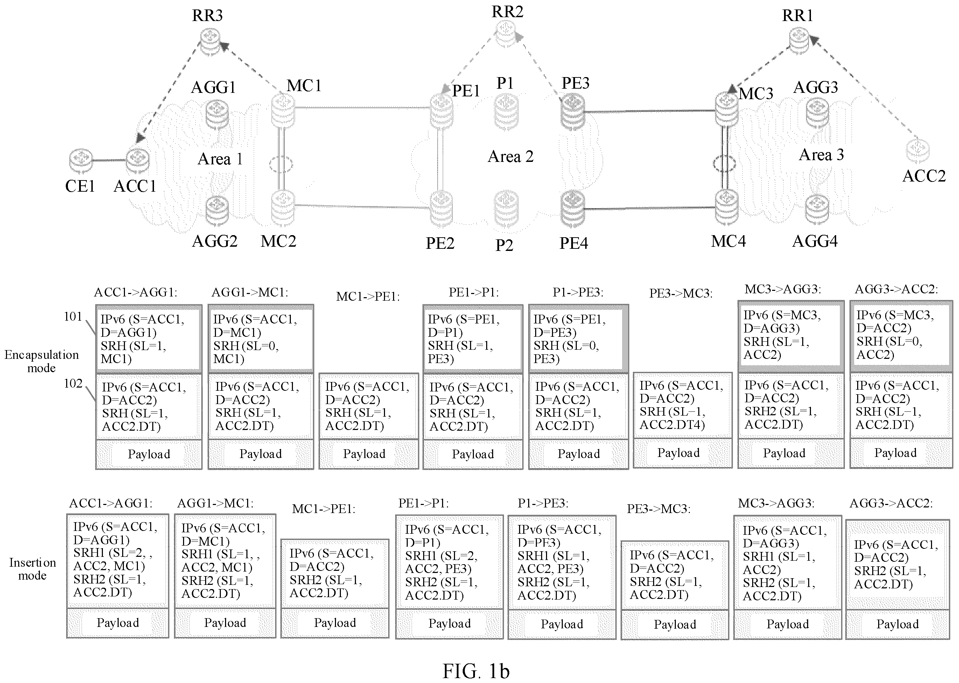

In this case, a process in which the ACC1 forwards a packet to the ACC2 is described with reference to FIG. 1b.

When receiving a service packet from the CE1, the ACC1 may search a VRF table based on a destination IP address of the service packet, to obtain a corresponding VPN SID, further match, based on the VPN SID, a VPN route advertised by the ACC2 to the ACC1, and correspondingly match, based on a next hop and a color attribute of the VPN route, a TE tunnel corresponding to the new BGP route in the area 1. Further, the ACC1 may encapsulate the service packet. When encapsulating the service packet, the ACC1 needs to encapsulate the following information: the VPN SID, related information of a new end-to-end BGP tunnel from the ACC1 to the ACC2, and related information of the tunnel for forwarding the packet in the area 1.

In an example, two SRv6 headers may be encapsulated. One SRv6 header carries the related information of the new end-to-end BGP tunnel from the ACC1 to the ACC2, and the information may include, for example, the VPN SID and an SRv6 SID corresponding to the new BGP route. For example, refer to FIG. 1b. In an encapsulation mode, the ACC1 may encapsulate two SRv6 headers on the basis of a received payload (payload). One SRv6 header 102 carries the related information of the new end-to-end BGP tunnel from the ACC1 to the ACC2. In addition, the SRv6 header 102 includes two SIDs of the ACC2. ACC2 in the SRv6 header 102 is a SID related to the new BGP tunnel determined based on the color attribute. ACC2.DT in the SRv6 header 102 may be a VPN SID of the ACC2. The other SRv6 header includes the related information of the tunnel for forwarding the packet in the area 1. For example, refer to FIG. 1b. An SRv6 header 101 carries information about a path for forwarding in the area 1. As shown in FIG. 1b, the SRv6 header 101 indicates that a path for forwarding in the area 1 is ACC1-AGG1-MC1.

After the ACC1 forwards the packet to the MC1, the MC1 removes the SRv6 header 101 and forwards the packet to the PE1. After receiving the packet sent by the MC1, the PE1 may continue to encapsulate the packet and forward the encapsulated packet to the PE3. A manner in which PE1 encapsulates a packet is similar to a manner in which ACC1 encapsulates a packet, and is not described herein again.

After receiving the packet, the PE3 further removes an SRv6 header that carries information about a forwarding path in the area 2, and forwards the packet to the MC3. After receiving the packet sent by the PE3, the MC3 may continue to encapsulate the packet, and forward the encapsulated packet to the ACC2. A manner in which MC3 encapsulates a packet is similar to a manner in which ACC1 encapsulates a packet, and is not described herein again.

The SRv6 header herein includes an IPv6 basic header and a segment routing header (segment routing header, SRH).

In another example, the two SRv6 headers may be compressed into one SRv6 header. For example, an SRH carrying related information of a forwarding tunnel in the area 1 may be inserted into the other SRv6 header. That is, one IPv6 basic header and two SRHs are used to encapsulate a service packet. For example, refer to FIG. 1b. In an insertion mode, the ACC1 may encapsulate an SRv6 header on the basis of a received payload (payload). The SRv6 header includes two SRHs, an SRH1 carries information about a forwarding path in the area 1 and ACC2, and an SRH2 carries the VPN SID of the ACC2.

After the ACC1 forwards the packet to the MC1, the MC1 removes the SRH, modifies a destination address of the packet to the last SID (that is, ACC2) in the SRH1, and forwards the packet to the PE1. After receiving the packet sent by the MC1, the PE1 may continue to encapsulate the packet, and forward the encapsulated packet to the PE3. A manner in which PE1 encapsulates a packet is similar to a manner in which ACC1 encapsulates a packet, and is not described herein again.

After receiving the packet, the PE3 further removes the SRv6 header that carries information about a forwarding path in the area 2, modifies the destination address of the packet to ACC2, and forwards the packet to the MC3. After receiving the packet sent by the PE3, the MC3 may continue to encapsulate the packet, and forward the encapsulated packet to the ACC2. A manner in which MC3 encapsulates a packet is similar to a manner in which ACC1 encapsulates a packet, and is not described herein again.

In the foregoing manner, although an end-to-end TE path from the ACC1 to the ACC2 does not need to be deployed, a service packet can be forwarded to the ACC2 through tunnels in the areas. However, in the foregoing manner, in the encapsulation mode, two SRv6 headers need to be encapsulated in a packet forwarding process, and packet encapsulation overheads are high. In the insertion mode, one IPv6 basic header and two SRHs are used to encapsulate the service packet, which does not comply with the basic SRv6 specification.

In view of this, embodiments of this application provide a route advertisement method and a communication method. The following describes, with reference to the accompanying drawings, the route advertisement method and the communication method provided in embodiments of this application.

It should be noted that FIG. 1a is shown merely for ease of understanding this solution, and does not constitute a limitation on embodiments of this application. In an example, the area spanned between the CE1 and the CE2 is not limited to the three areas shown in FIG. 1a. For example, the area spanned between the CE1 and the CE2 is the area 1. In another example, the area spanned between the CE1 and the CE2 includes the area 1 and the area 2. In another example, a CE device connected to the area 1 through the ACC1 is not limited to the CE1 shown in FIG. 1a, and a CE device connected to the area 2 through the ACC2 is not limited to the CE2 shown in FIG. 1a. For example, the ACC1 may be further connected to a CE3, the ACC2 may be further connected to a CE4, and the CE3 may communicate with the CE4 through the area 1, the area 2, and the area 3.

It should be noted that the communication apparatus in embodiments of this application may be a network device, for example, a switch or a router, or may be some components on a network device, for example, a board or a line card on the network device, or may be a function module on the network device, or may be a chip configured to implement the method in this application. This is not specifically limited in embodiments of this application. Communication apparatuses may be directly connected, for example, but not limited to, through an Ethernet cable or an optical cable.

Before the method provided in embodiments of this application is described, concepts that may be used in embodiments of this application are first described.

First, an SRv6 policy is described.

The SRv6 policy is also referred to as an SRv6 TE policy. The SRv6 TE policy is a new tunnel traffic diversion technology developed based on an SRv6 technology. Accordingly, forwarding information corresponding to the SRv6 TE policy may be represented as a segment list (segment list) of a specified path, and the segment list may also be referred to as a SID list. Each SID list is an end-to-end path from a source to a destination and indicates a device on a network to follow the specified path. If a data packet is imported to the SRv6 TE policy, a head node adds a SID list to the data packet, and other nodes on the network forward the data packet along the path indicated by the SID list.

For example, the SRv6 TE policy includes the following three parts:
Head point: a node that generates the SRv6 TE policy.

Color: an extended community attribute carried by the SRv6 TE policy, where BGP routes with a same color attribute can use the SRv6 TE policy.

Endpoint (End Point): a destination address of the SRv6 TE policy.

The color and endpoint information may be added to the SRv6 TE policy through configuration. The service network head point matches the color attribute and next-hop information carried in the route with the SRv6 TE policy to forward service traffic. The color attribute defines an application-level network SLA policy. Network paths may be planned based on specific service intents (for example, specific service SLAs).

A model of the SRv6 TE policy is similar to that of an SR-MPLS TE policy. The SRv6 TE policy may include a plurality of candidate paths (Candidate Path). The candidate path carries a preference attribute (Preference). A valid candidate path with a highest preference is used as a primary path of the SRv6 TE policy. A candidate path may include a plurality of segment lists, and each segment list carries a weight attribute. Each segment list is an explicit SID stack. A segment list may indicate a network device to forward a packet. Load balancing can be implemented among a plurality of segment lists.

The SRv6 TE policy can be statically configured on a forwarder or dynamically generated by a controller and then delivered to the forwarder. In contrast, the dynamic mode facilitates automatic network deployment. If a same SRv6 TE policy is generated in a plurality of modes, the forwarder selects the SRv6 TE policy in the same way as the SR-MPLS TE policy. The SRv6 TE policy may be established using a combination of End SID, End.X SID, Anycast SID, or Binding SID. A user may use CLI/Netconf to statically configure the SRv6 TE policy or use the controller to deliver the SRv6 TE policy. To statically configure the SRv6 TE policy, an endpoint, a color, a preference of a candidate path, and a segment list need to be configured. A first-hop SID of the segment list supports End SID and End.X SID, but does not support Binding SID.

For example, a main process in which the controller delivers the SRv6 TE policy is as follows:

The controller collects a network topology and SID information through BGP-link state (link state, LS).

The controller and a head point forwarder establish a BGP neighbor relationship of an IPv6 SR policy address family.

The controller computes the SRv6 TE policy and delivers the SRv6 TE policy to the head point through the BGP neighbor relationship. The head point generates an SRv6 TE policy entry.

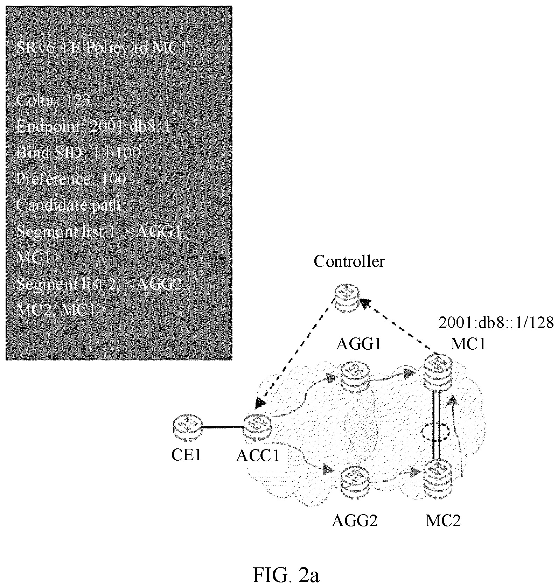

The following uses the area 1 shown in FIG. 1a as an example to describe an example of the SRv6 TE policy delivered by the controller. FIG. 2a is a schematic diagram of an example application scenario according to an embodiment of this application.

As shown in FIG. 2a, the SRv6 TE policy delivered by the controller to the head point ACC1 includes the following information:
Color:123
Endpoint:2001:db8::1
Bind SID:1:b100
Preference: 100
Candidate path
Segment list 1: <AGG1, B>
Segment list 2: <AGG2, MC2, MC1>

Color:123 indicates that a color value of the color attribute carried in the SRv6 TE policy is 123.

Endpoint:2001:db8::1 indicates the endpoint of the SRv6 TE policy, and 2001:db8::1 is an address of the MC1.

Preference: 100 indicates that a preference attribute value is 100.

Segment list 1: <AGG1, MC1> indicates a path ACC1-AGG1-MC1.

Segment list 2: <AGG2, MC2, MC1> indicates a path ACC1-AGG2-MC2-MC1.

The following describes a color-based traffic diversion process by using an example.

First, concepts related to color-based traffic diversion are described.

Route color: An extended community attribute color is added to a route through a routing policy. The route carrying a color attribute can be iterated to an SRv6 TE policy based on the color and a next-hop address.

A route color process is as follows:
A routing policy is configured, a specific route is matched, and a specific color attribute is set.

The routing policy is applied to a BGP neighbor or an entire VPN instance as an ingress or egress policy.

Color-based traffic diversion:
An SRv6 TE policy may divert traffic based on a color attribute of a route. Color-based traffic diversion means directly iterating to the SRv6 TE policy based on an extended community attribute color and a destination address of a route.

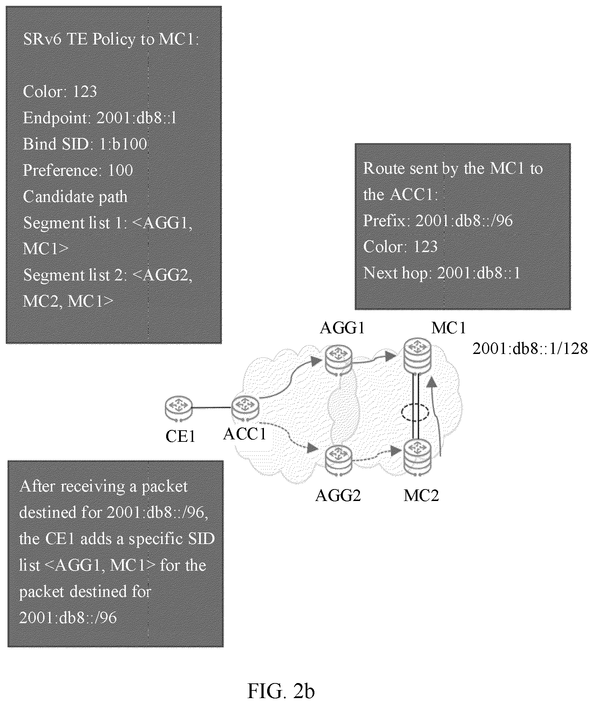

The following describes an example of an entire color-based traffic diversion process with reference to FIG. 2b. FIG. 2b is a schematic diagram of another example application scenario according to an embodiment of this application.

The controller delivers an SRv6 TE policy to the head point device ACC1. Information included in the SRv6 TE policy is shown in FIG. 2b, a color attribute of the SRv6 TE policy corresponds to the color value 123, and an EndPoint is the address 2001:db8::1 of the device MC1.

A BGP egress policy or VPN egress policy is configured on the device MC1 (or a BGP ingress policy or VPN ingress policy is configured on the device ACC1), the extended community attribute color 123 is set for a routing prefix 2001:db8::/96, and a next hop of the route is set to the address 2001:db8::1 of the device MC1. Then, the route is sent to the device ACC1 through a BGP neighbor.

A tunnel policy is configured on the head point device ACC1. After receiving a BGP route 2001:db8::/96, the device ACC1 iterates to the SRv6 TE policy based on the extended community attribute 123 and the next hop 2001:db8::1. During forwarding, a specific SID list <AGG1, MC1> is added to a packet destined for 2001:db8::/96.

Next, the solution provided in embodiments of this application is first described from a perspective of a control plane.

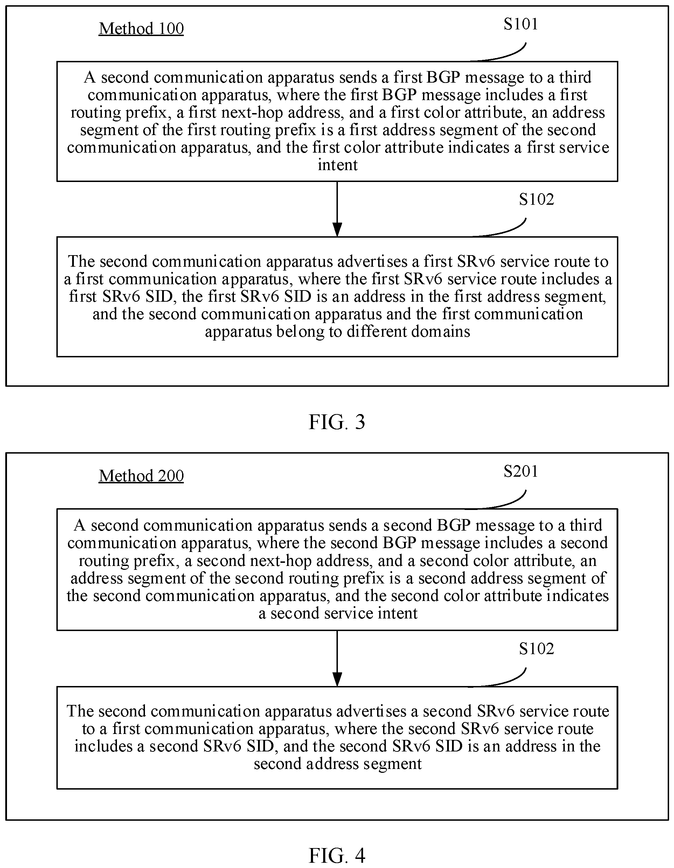

FIG. 3 is a schematic flowchart of a route advertisement method according to an embodiment of this application.

In an example, the method 100 shown in FIG. 3 may be performed by a second communication apparatus.

For a first communication apparatus, the second communication apparatus, and a third communication apparatus in embodiments of this application, it should be noted that:
In an example, if the first communication apparatus is a head node of an inter-domain forwarding path, the first communication apparatus may be an edge node in a network domain, for example, may be an ingress PE.

In an example, the second communication apparatus may be an edge node in a network domain, for example, may be an egress PE.

In an example, if the first communication apparatus is an intermediate node of an inter-domain forwarding path, the first communication apparatus may be, for example, a border node in a network domain. That is, the first communication apparatus may be an area border router (area border router, ABR). The network domain described herein may be an IGP domain or an autonomous system AS domain. When the network domain is an AS domain, the first communication apparatus may be, for example, an autonomous system boundary router (Autonomous System Boundary Router, ASBR).

In an example, the first communication apparatus in the method 100 belongs to a first domain, both the second communication apparatus and the third communication apparatus belong to a second domain, and the first communication apparatus is connected to the second communication apparatus through the third communication apparatus. For example, in the scenario shown in FIG. 1a, the second communication apparatus may correspond to the ACC2 shown in FIG. 1a. The first communication apparatus in the method 100 may correspond to the ACC1 shown in FIG. 1a. The third communication apparatus in the method 100 may, for example, correspond to the MC3 shown in FIG. 1a. The route advertisement method 100 shown in FIG. 3 may include, for example, S101 and S102 in the following.

S101: The second communication apparatus sends a first BGP message to the third communication apparatus, where the first BGP message includes a first routing prefix, a first next-hop address, and a first color attribute, an address segment of the first routing prefix is a first address segment of the second communication apparatus, and the first color attribute indicates a first service intent SRv6 service route.

S102: The second communication apparatus advertises a first SRv6 service route to the first communication apparatus, where the first SRv6 service route includes a first SRv6 SID, the first SRv6 SID is an address in the first address segment, and the second communication apparatus and the first communication apparatus belong to different domains.

In an example, the second communication apparatus may, for example, advertise the first SRv6 service route to the first communication apparatus through an RR.

A service intent in this application may be, for example, a requirement for an SLA, for example, a requirement for a delay, a requirement for a packet loss, and/or a requirement for a bandwidth.

In an example, the first address segment may be configured based on the first service intent, and further, the first SRv6 SID is allocated in the first address segment.

In an example, if a VPN service is configured on the second communication apparatus, the first SRv6 service route may be a first SRv6 VPN route.

In an example, an SRv6 locator address segment of the second communication apparatus may be divided into a plurality of different address segments, and the first address segment may be any one of the plurality of address segments. For example, the SRv6 locator address segment of the second communication apparatus may be divided into a plurality of different address segments based on service intents. One service intent corresponds to one address segment. The first address segment may be an address segment corresponding to the first service intent.

In another example, the second communication apparatus may include at least one SRv6 locator address segment, and the first address segment may be a first SRv6 locator address segment of the second communication apparatus. For example, a plurality of SRv6 locator address segments may be configured for the second communication apparatus based on service intents. One service intent corresponds to one SRv6 locator address segment, and the first address segment may be a first SRv6 locator address segment corresponding to the first service intent.

In an example, after the first communication apparatus sends the first BGP message to the third communication apparatus, the third communication apparatus may perform, for example, steps A1 to A3 in the following.

A1: Receive the first BGP message, where the first BGP message includes the first routing prefix, the first next-hop address, and the first color attribute, an address segment of the first routing prefix is the first address segment of the second communication apparatus, and the first color attribute indicates the first service intent.

A2: Generate a first BGP route based on the first BGP message.

In an example, the first BGP route may be a first BGP IPv6 unicast route. In other words, the first BGP route may be a route advertised based on an IPv6 unicast address family. In another example, the first BGP route may alternatively be a route advertised based on another address family. For example, the first BGP route is advertised by extending a new address family.

A3: Iterate the first BGP route to a first target path based on the first color attribute and the first next-hop address, where the first target path is used to forward a packet that carries the first SRv6 SID of the second communication apparatus, and the first SRv6 SID is an address in the first address segment.

For A2 and A3, it should be noted that after receiving the first BGP message, the third communication apparatus may generate the first BGP route including the first routing prefix and the first next-hop address, and obtain the first target path through iteration based on the first color attribute and the first next-hop address, to iterate the first BGP route to the first target path. The first target path may be any one of an SRv6 policy, an SRv6 flex-algo path, an RSVP-TE tunnel, an SR MPLS policy, an SR flex-algo path, an MPLS-TE tunnel, or a VxLAN tunnel. A specific type of the first target path is not specifically limited in this application. For example, the first target path is an SRv6 policy. It can be learned from the foregoing descriptions of the SRv6 policy that the SRv6 policy includes an address of an endpoint and a color attribute. Therefore, when the first color attribute matches the color attribute in the SRv6 policy, and the first next-hop address matches the address of the endpoint in the SRv6 policy, the third communication apparatus iterates the first BGP route to the first target path, and obtains first forwarding information of the first target path. After obtaining the first forwarding information, the third communication apparatus may forward a packet including the first SRv6 SID in a packet forwarding phase. In an example, the third communication apparatus may deliver a correspondence between the first BGP route and the first forwarding information to a forwarding plane, so that in the packet forwarding phase, when the first SRv6 SID matches the first BGP route, a packet including the first SRv6 SID is forwarded based on the first forwarding information.

The first forwarding information described herein may be information that indicates the first target path. For example, when the first target path is an SRv6 policy, the first forwarding information may be a SID list indicating the first target path.

Moreover, in addition to performing the method 100, the second communication apparatus may further perform a method 200 shown in FIG. 4. FIG. 4 is a schematic flowchart of another route advertisement method according to an embodiment of this application. The method 200 shown in FIG. 4 may include S201 and S202 in the following.

S201: The second communication apparatus sends a second BGP message to the third communication apparatus, where the second BGP message includes a second routing prefix, a second next-hop address, and a second color attribute, an address segment of the second routing prefix is a second address segment of the second communication apparatus, and the second color attribute indicates a second service intent.

S202: The second communication apparatus advertises a second SRv6 service route to the first communication apparatus, where the second SRv6 service route includes a second SRv6 SID, and the second SRv6 SID is an address in the second address segment.

In an example, if a VPN service is configured on the second communication apparatus, the second SRv6 service route may be a second SRv6 VPN route.

In an example, the first address segment may be configured based on the first service intent, and further, the first SRv6 SID is allocated in the first address segment.

In an example, an SRv6 locator address segment of the second communication apparatus may be divided into a plurality of different address sub-segments, and the first address segment and the second address segment may be any two different address sub-segments in the plurality of address segments. For example, the SRv6 locator address segment of the second communication apparatus may be divided into a plurality of different address sub-segments based on service intents. One service intent corresponds to one address sub-segment. The first address segment may be an address sub-segment corresponding to the first service intent, and the second address segment may be an address sub-segment corresponding to the second service intent. The following table is a specific example of the example.

| |
|---|
| SRv6 locator loc1 2001:db8:3:4 /64 ##Locator address segment |
| Sub-locator loc1-sub1 2001:db8:3:4:0001:: /80 color 1 ## first address segment, corresponding to a color 1 or a service intent 1; |
| Sub-locator loc1-sub2 2001:db8:3:4:0002:: /80 color 2 ##second address segment, corresponding to a color 2 or a service intent 2; |
| Sub-locator loc1-sub3 2001:db8:3:4:0003:: /80 color 3 ##third address segment, corresponding to a color 3 or a service intent 3; |
| Ip vpn-instance vpn1 |
| Using loc1-sub1 2001:db8:3:4:0001::1 ##VPN1 using the address segment corresponding to the service intent 1; |
| Ip vpn-instance vpn2 |
| Using loc1-sub1 2001:db8:3:4:0001::2 ##VPN2 using the address segment corresponding to the service intent 1; |
| Ip vpn-instance vpn3 |
| Using loc1-sub2 2001:db8:3:4:0002::3 ##VPN3 using the address segment corresponding to the service intent 2. |

In another example, the second communication apparatus may include a plurality of SRv6 locator address segments, and the first address segment and the second address segment may be two different SRv6 locator address segments of the second communication apparatus. For example, a plurality of SRv6 locator address segments may be configured for the second communication apparatus based on service intents. One service intent corresponds to one SRv6 locator address segment. The first address segment may be a first SRv6 locator address segment corresponding to the first service intent. The second address segment may be a second SRv6 locator address segment corresponding to the second service intent.

In this example, a node identifier is before an identifier of a service intent, or may be after the identifier of the service intent.

In an example, the node identifier may be before the identifier of the service intent, for example, in Example 1:

| | |
|---|---|
| SRv6 locator loc1 2001:db8:1 /48 color1 ##Locator address segment 1, corresponding to a color 1 or a service intent 1; | |
| SRv6 locator loc2 2001:db8:2 /48 color2 ##Locator address segment 2, corresponding to a color 2 or a service | |
| intent 2; | |
| SRv6 locator loc3 2001:db8:3 /48 color3 ##Locator address segment 3, corresponding to a color 3 or a service intent 3; | |
| Ip vpn-instance vpn1 | |
| | Using loc1 2001:db8:1::1 ##VPN1 using the address segment corresponding to the service intent 1; |
| Ip vpn-instance vpn2 | |
| | Using loc1 2001:db8:1::2 ##VPN2 using the address segment corresponding to the service intent 1; |
| Ip vpn-instance vpn3 | |
| | Using loc2 2001:db8:2::3 ##VPN3 using the address segment corresponding to the service intent 3; |
| ## 2001:db8 indicates a node; | |
| ## another node may use 2001:db9; | |
| ## another second node may use 2001:dba; | |
| ## that is, in a 128-bit IPv6 address space, a node identifier is before an identifier of a service intent. | |

In another example, node identifiers of a plurality of nodes in an area may be after an identifier of a service intent. Example 2:

| |
|---|
| ##All nodes in an area (for example, the area 3 shown in FIG. 1) are configured with the following common prefixes: |
| Global common-prefix 2001:db8::/32 ##public prefix for all nodes & all colors in the area; |
| Global common-prefix 2001:db8:1:: /48 color1 ##common prefix corresponding to a color 1; |
| Global common-prefix 2001:db8:2:: /48 color2 ##common prefix corresponding to a color 2; |
| Global common-prefix 2001:db8:3:: /48 color3 ##common prefix corresponding to a color 3. |
| ##Node 1 (for example, the ACC2 in FIG. 1) in the area is configured with information for distinguishing nodes under the common color prefix: |
| SRv6-locator node1-loc1 2001:db8:0:0001:: /49~64 ## the 49^{th} to 64^{th} bits from left to right identify the node 1, the 33^{rd} to 48^{th} bits indicate a service intent, which is defined by color1/color2/color3; |
| ##Node 2 (for example, the AGG3 in FIG. 1) in the area is configured with information for distinguishing nodes under the common color prefix: |
| SRv6-locator node1-loc1 2001:db8:0:0002:: /49~64 ## the 49^{th} to 64^{th} bits from left to right identify the node 2, the 33^{rd} to 48^{th} bits indicate a service intent, which is defined by color1/color2/color3; |
| ##Node 3 (for example, the MC3 in FIG. 1) in the area is configured with information for distinguishing nodes under the common color prefix: |
| SRv6-locator node1-loc1 2001:db8:0:0003:: /49~64 ## the 49^{th} to 64^{th} bits from left to right identify the node 3, the 33^{rd} to 48^{th} bits indicate a service intent, which is defined by color1/color2/color3. |

FIG. 1 is used as an example. In the manner shown in Example 2, when the ACC2 advertises a route of the color 1 to the MC3, a carried routing prefix may be 2001:db8:1:0001:: /64. When the MC3 advertises a route of the color 1 to the PE3, routes of a plurality of nodes corresponding to the color 1 in this area may be aggregated into one routing prefix 2001:db8:1:: /48 for advertisement. Similarly, for the color 2, a prefix of a route advertised by the ACC2 to the MC3 is 2001:db8:2:0001:: /64, and a prefix of a route advertised by the MC3 to the PE3 is 2001:db8:2:: /48.

An embodiment of this application further provides a communication method. Next, the following describes the communication method.

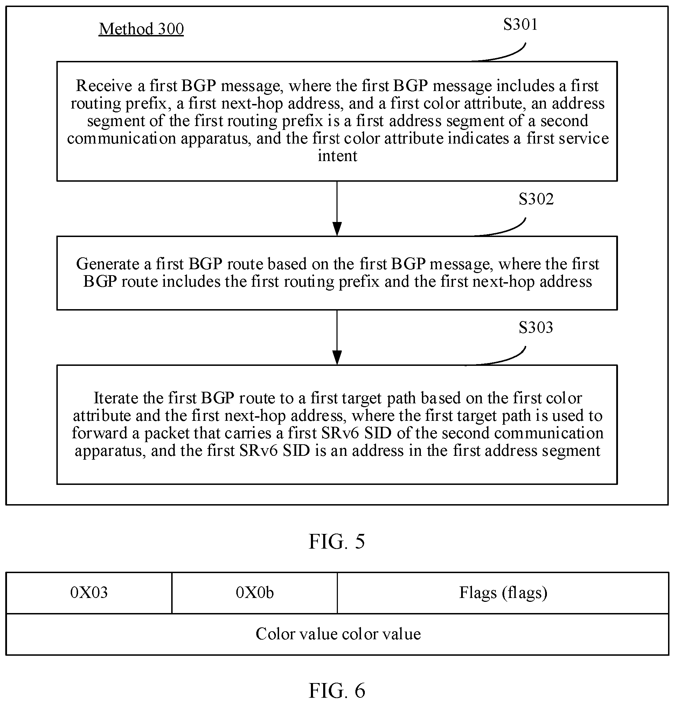

FIG. 5 is a schematic flowchart of a communication method according to an embodiment of this application. The communication method 300 shown in FIG. 5 may be performed by a first communication apparatus. The first communication apparatus may be the ACC1 shown in FIG. 1a, or may be the AGG1, the PE1, the MC3, the MC1, the PE3, or the AGG3 shown in FIG. 1a. This is not specifically limited in this embodiment of this application.

In an example, the method 300 shown in FIG. 5 may include, for example, S301 to S303 in the following.

S301: Receive a first BGP message, where the first BGP message includes a first routing prefix, a first next-hop address, and a first color attribute, an address segment of the first routing prefix is a first address segment of a second communication apparatus, and the first color attribute indicates a first service intent.

S302: Generate a first BGP route based on the first BGP message, where the first BGP route includes the first routing prefix and the first next-hop address.

S303: Iterate the first BGP route to a first target path based on the first color attribute and the first next-hop address, where the first target path is used to forward a packet that carries a first SRv6 SID of the second communication apparatus, and the first SRv6 SID is an address in the first address segment.

In an example, the first SRv6 SID is a first SRv6 VPN SID. For example, if a VPN service is configured on the second communication apparatus, the first SRv6 SID is the first SRv6 VPN SID. For specific implementation of the method 300, refer to the foregoing descriptions of steps A1 to A3. Details are not described herein again.

In an example, if the first communication apparatus corresponds to the ACC1 shown in FIG. 1a, the first communication apparatus may further receive a first SRv6 service route advertised by the second communication apparatus. The first SRv6 service route includes the first SRv6 SID. After receiving the first SRv6 service route, the first communication apparatus may iterate to the first BGP route based on the first SRv6 SID because the first SRv6 SID is an address in the first address segment. Because the first BGP route is iterated to the first target path, after iterating the first BGP route based on the first SRv6 SID, the first communication apparatus may obtain first forwarding information of the first target path. In an example, the first communication apparatus may store the first forwarding information. For example, the first communication apparatus delivers a first correspondence between the first forwarding information and the first SRv6 SID to a forwarding plane for storage. In a packet forwarding phase, the first communication apparatus may determine the first forwarding information corresponding to the first SRv6 SID based on the first correspondence, to further encapsulate a packet including the first SRv6 SID and the first forwarding information.

The first forwarding information described herein may be information that indicates the first target path. For example, when the first target path is an SRv6 policy, the first forwarding information may be a SID list indicating the first target path.

In an example, if a VPN service is configured on the second communication apparatus, the first SRv6 service route may be a first SRv6 VPN route.

In an example, first indication information may be preconfigured on the first communication apparatus, and the first indication information indicates the first communication apparatus to iterate to the first target path based on the first BGP route.

In another example, the first BGP message may include the first indication information, and the first indication information indicates the first communication apparatus to iterate to the first target path based on the first BGP route. In this case, the first communication apparatus may directly iterate the first BGP route to the first target path based on the first indication information, and the first indication information does not need to be additionally configured on the first communication apparatus.

In an example, a conventional BGP route message may be extended, and a new BGP route attribute may be extended to carry the first indication information. In other words, in an example, the first BGP message may include a newly extended BGP route attribute, and the newly extended BGP route attribute carries the first indication information. In another example, the color attribute may be extended, to carry the first indication information by using the color attribute. In this case, the first color attribute in the first BGP message indicates the first communication apparatus to iterate the first BGP route to the first target path. Refer to FIG. 6 for understanding. FIG. 6 is a schematic diagram of a structure of a color attribute according to an embodiment of this application. As shown in FIG. 6, the color attribute includes a flags (flags) field. In an example, the first indication information may be carried by the flags field.

In another example, if the first communication apparatus corresponds to the ACC1 shown in FIG. 1a, the first communication apparatus may further receive first information sent by a controller. The first information includes the first SRv6 SID. After receiving the first information, the first communication apparatus may iterate to the first BGP route based on the first SRv6 SID because the first SRv6 SID is an address in the first address segment. Because the first BGP route is iterated to the first target path, after iterating the first BGP route based on the first SRv6 SID, the first communication apparatus may obtain the first forwarding information of the first target path. In an example, the first communication apparatus may store the first forwarding information. For example, the first communication apparatus delivers the first correspondence between the first forwarding information and the first SRv6 SID to the forwarding plane for storage. In the packet forwarding phase, the first communication apparatus may determine the first forwarding information corresponding to the first SRv6 SID based on the first correspondence, to further encapsulate a packet including the first SRv6 SID and the first forwarding information.

In an example, the first SRv6 SID included in the first information may be a first SRv6 VPN SID, a first SRv6 service segment SID, or a first SRv6 binding SID. When the first SRv6 SID is the first SRv6 VPN SID, the first information may be, for example, an SRv6 VPN route. When the first SRv6 SID is the first SRv6 service segment SID or the first SRv6 binding SID, the first information may include another SID in addition to the first SRv6 SID, and the first SRv6 SID may be the first SID in the first information.

In some embodiments, when the first SRv6 SID is the first SRv6 service segment SID or the first SRv6 binding SID, after configuring the first SRv6 SID, the second communication apparatus may send the first SRv6 SID and related information of the first SRv6 SID to the controller. Correspondingly, the controller may determine the first information based on the received first SRv6 SID and the received related information of the first SRv6 SID, and send the first information to the first communication apparatus.

When the first SRv6 SID is the first SRv6 service segment SID, the related information of the first SRv6 SID may be, for example, service attribute information. When the first SRv6 SID is the first SRv6 binding SID, the related information of the first SRv6 SID may be, for example, information about a tunnel bound to the binding SID.

In an example, the second communication apparatus may send the first SRv6 SID to the controller by using, for example, a path computation element communication protocol (Path Computation Element Communication Protocol, PCEP) or a BGP LS protocol. For example, the controller may send the first information including the first SRv6 SID to the first communication apparatus by using a BGP SR policy or the PCEP.

In an example, after receiving the first BGP message, the first communication apparatus may obtain a second BGP message based on the first BGP message, where the second BGP message is used to advertise a second BGP route; and send the second BGP message to a third communication apparatus. In an example, next hop information in the second BGP message is modified to information about the first communication apparatus. In a specific example, the first communication apparatus may modify a first next hop, and modify the first next hop to a second next hop. The second next hop is an IP address of the first communication apparatus. In another example, color values corresponding to a same service intent are different for different domains. Therefore, the first communication apparatus may further modify the first color attribute to a second color attribute. The second color attribute indicates the first service intent in a domain of the third communication apparatus. For the first communication apparatus and the third communication apparatus, an example is used herein for description: The first communication apparatus corresponds to the MC3 shown in FIG. 1a, and the third communication apparatus may correspond to the PE3 shown in FIG. 1a. That is, the ACC2 sends the first BGP message to the MC3, and the MC3 obtains the second BGP message based on the first BGP message, and sends the second BGP message to the PE3.

For the first next-hop address, it should be noted that:
in an example, if the first communication apparatus and the second communication apparatus belong to a same domain, the first BGP message may be a message sent by the second communication apparatus to the first communication apparatus. In this case, the first next-hop address may be an IP address of the second communication apparatus. For example, the first communication apparatus corresponds to the MC3 shown in FIG. 1a, and the first BGP message may be a message sent by the ACC2 to the MC3. Correspondingly, the first next-hop address carried in the first BGP message may be an IP address of the second communication apparatus (the ACC2).

In another example, the first communication apparatus is a border node of a first domain, and the second communication apparatus belongs to a second domain different from the first domain. The first communication apparatus may be connected to the second communication apparatus through the third communication apparatus, and the third communication apparatus may be another border node of the first domain. In this case, the first next-hop address may be an IP address of the third communication apparatus. For example, if the first communication apparatus is the ACC1, the second communication apparatus is the ACC2, and the third communication apparatus is the MC1, the first BGP message may be a message sent by the MC1 to the ACC1. Correspondingly, the first next-hop address carried in the first BGP message may be an IP address of the third communication apparatus (the MC1). In another example, if the first communication apparatus is the PE1, the second communication apparatus is the ACC2, and the third communication apparatus is the PE3, the first BGP message may be a message sent by the PE3 to the PE1. Correspondingly, the first next-hop address carried in the first BGP message may be an IP address of the third communication apparatus (the PE3).

In an example, the second BGP message may indicate the third communication apparatus to iterate the second BGP route to a second target path based on the second color attribute and the second next-hop address. The second target path is used to forward a packet that carries the first SRv6 SID. In this case, for a packet that carries the first SRv6 SID, the packet may be forwarded between border nodes in two different domains, that is, between the third communication apparatus and the first communication apparatus (for example, between the PE3 and the MC3), or may be forwarded based on the second target path that matches the second color attribute, to effectively ensure that a service intent can be met when the service packet is forwarded between border nodes in different domains. For example, the PE3 may iterate the second BGP route to an SRv6 policy between the PE3 and the MC3 based on the second color attribute and the second next-hop address.

Similar to the first target path, the second target path may also be any one of an SRv6 policy, an SRv6 flex-algo path, an RSVP-TE tunnel, an SR MPLS policy, an SR flex-algo path, an MPLS-TE tunnel, or a VxLAN tunnel. A specific type of the second target path is not specifically limited in this application.

In an example, the second BGP message may include second indication information, and the second indication information indicates the third communication apparatus to iterate the second BGP route to the second target path based on the second color attribute and the second next-hop address.

In an example, a conventional BGP route message may be extended, and a new BGP route attribute may be extended to carry the second indication information. In other words, in an example, the second BGP message may include a newly extended BGP route attribute, and the newly extended BGP route attribute carries the second indication information.

In another example, the color attribute may be extended, to carry the second indication information by using the color attribute. In this case, the second color attribute in the second BGP message indicates the third communication apparatus to iterate the second BGP route to the second target path based on the second color attribute and the second next-hop address. For a structure of the second color attribute that carries the second indication information, refer to FIG. 6 for understanding. Details are not described herein again.

Certainly, in another example, if the second BGP message does not indicate the third communication apparatus to iterate the second BGP route to the second target path based on the second color attribute and the second next-hop address, a packet carrying the first SRv6 SID may be forwarded between border nodes in two different domains, that is, between the third communication apparatus and the first communication apparatus (for example, between the PE3 and the MC3) based on common IPv6.

For descriptions that "the third communication apparatus iterates the second BGP route to the second target path based on the second color attribute and the second next-hop address", refer to the foregoing descriptions of step A3. Details are not described herein again.

Next, from a perspective of packet forwarding, how the first communication apparatus forwards a packet based on the first target path is described.

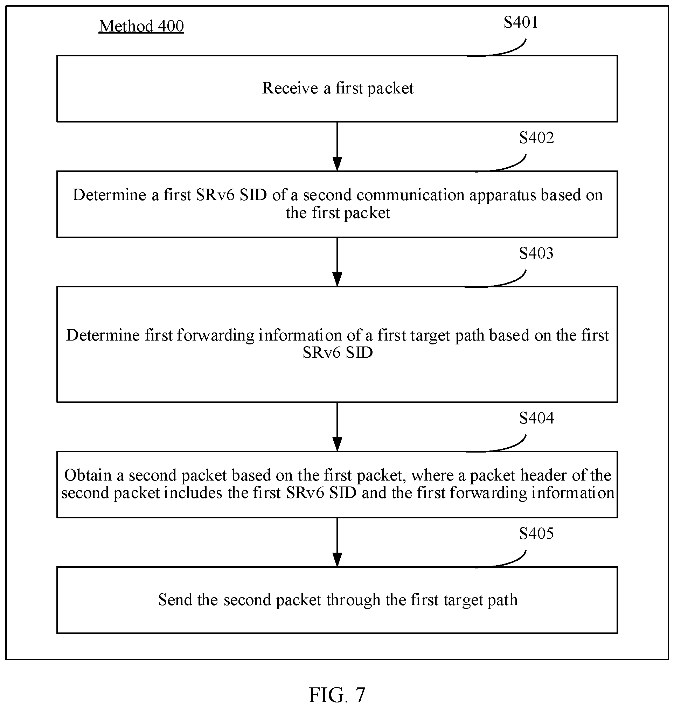

FIG. 7 is a schematic flowchart of a packet forwarding method according to an embodiment of this application. The packet forwarding method 400 shown in FIG. 7 may include, for example, S401 to S405 in the following.

S401: Receive a first packet.

In an example, if the first communication apparatus corresponds to the ACC1 shown in FIG. 1a, the first packet may be an IPv4 packet, or may be an IPv6 packet. This is not specifically limited in this embodiment of this application. In this case, a destination IP address of the first packet may be an IP address of the CE2.

In an example, if the first communication apparatus corresponds to the AGG1, the PE1, the MC3, or the AGG3 shown in FIG. 1a, the first packet may be an IPv6 packet, and a destination address of the first packet may be a first SRv6 SID of a second communication apparatus.

In an example, if the first packet is a packet corresponding to a VPN service, the first SRv6 SID may be a first SRv6 VPN SID of the second communication apparatus.

If the first packet is a packet corresponding to an SFC service, the first SRv6 SID may be a first SRv6 service segment SID, and the first SRv6 service segment SID is used to associate a related operation of a service chain.

The first SRv6 SID may alternatively be a first SRv6 binding SID, and is used for tunnel binding.

S402: Determine the first SRv6 SID of the second communication apparatus based on the first packet.

As described above, if the first communication apparatus corresponds to the ACC1 shown in FIG. 1a, the destination address of the first packet may be the IP address of the CE2. In this case, in an example, if the first packet is a packet corresponding to a VPN service, the first communication apparatus may receive the first packet through an interface corresponding to the VPN service. After receiving the first packet, the first communication apparatus may search a first VRF table corresponding to the interface for receiving the first packet, to obtain the first SRv6 SID.

In an example, the first VRF table may include, for example, a correspondence between the destination address of the first packet and the first SRv6 SID. In this case, the first communication apparatus may search the first VRF table by using the destination address of the first packet as an index, to obtain the first SRv6 SID.

In another example, the first VRF table may include a correspondence between the first SRv6 SID and a prefix that matches the destination address of the first packet. In this case, the first communication apparatus searches the first VRF table by using the destination address of the first packet as an index, and may obtain the first SRv6 SID after determining that the destination address matches a prefix in the first VRF table.

In another example, when the first SRv6 SID is a first SRv6 service segment SID or a first SRv6 binding SID, the first communication apparatus may determine, according to a flow matching rule, first information including the first SRv6 SID, to obtain the first SRv6 SID included in the first information. The flow matching rule may be preconfigured on the first communication apparatus, or may be delivered to the first communication apparatus through control.

As described above, if the first communication apparatus corresponds to the AGG1, the PE1, the MC3, or the AGG3 shown in FIG. 1a, the destination address of the first packet is the first SRv6 SID. In this case, the first communication apparatus may directly determine the destination address of the first packet as the first SRv6 SID.

S403: Determine first forwarding information of a first target path based on the first SRv6 SID.

In an example, when the first communication apparatus is the ACC1, as described above, after receiving a first SRv6 service route, the first communication apparatus may iterate a first BGP route based on the first SRv6 SID, and obtain the first forwarding information of the first target path. Therefore, after determining the first SRv6 SID, the first communication apparatus may obtain the first forwarding information.

In another example, when the first communication apparatus is the AGG1, the PE1, the MC3, or the AGG3, the first communication apparatus stores the first BGP route, the first BGP route includes a first routing prefix, and an address segment of the first routing prefix is a first address segment. The first SRv6 SID is an address in the first address segment. Therefore, the first BGP route may be obtained through route matching based on the first SRv6 SID. That is, the first BGP route may be iterated to based on the first SRv6 SID, and further, the first forwarding information of the first target path obtained by iteration of the first BGP route is obtained.

In an example, the first SRv6 SID may be an SRv6 SID allocated based on a first service intent. For example, the first address segment may be determined based on the first service intent, and then the first SRv6 SID is configured in the first address segment, so that the first SRv6 SID is configured based on the first service intent.

For the first address segment, refer to the foregoing descriptions of the first address segment. Details are not described herein again.

S404: Obtain a second packet based on the first packet, where a packet header of the second packet includes the first SRv6 SID and the first forwarding information.

After the first SRv6 SID and the first forwarding information are obtained, the first packet may be encapsulated based on the first SRv6 SID and the first forwarding information, to obtain the second packet. In an example, the first SRv6 SID and the first forwarding information may be encapsulated into a packet header, to obtain the second packet whose packet header includes the first SRv6 SID and the first forwarding information.

In an example, when the first target path is an SRv6 policy, the first SRv6 SID and the first forwarding information may be located in an SRH of the second packet.

In an example, when the first SRv6 SID is the first SRv6 service segment SID or the first SRv6 binding SID, the first SRv6 SID may be, for example, a destination address of the second packet.

S405: Send the second packet through the first target path.

After obtaining the second packet, the first communication apparatus may send the second packet through the first target path.

For the first target path, it should be noted that a head node of the first target path is the first communication apparatus. In an example, the first communication apparatus is a border node of a first domain, and the second communication apparatus belongs to a second domain different from the first domain. In this case, an egress node of the first target path may be another border node of the first domain. For example, the egress node of the first target path is a third communication apparatus of the first domain. The first communication apparatus may be connected to the second communication apparatus through the third communication apparatus. In this case, the first communication apparatus may forward the second packet through the first target path in the first domain in which the first communication apparatus is located.

For the method 400, an example in which the first target path is an SRv6 policy is used for description.

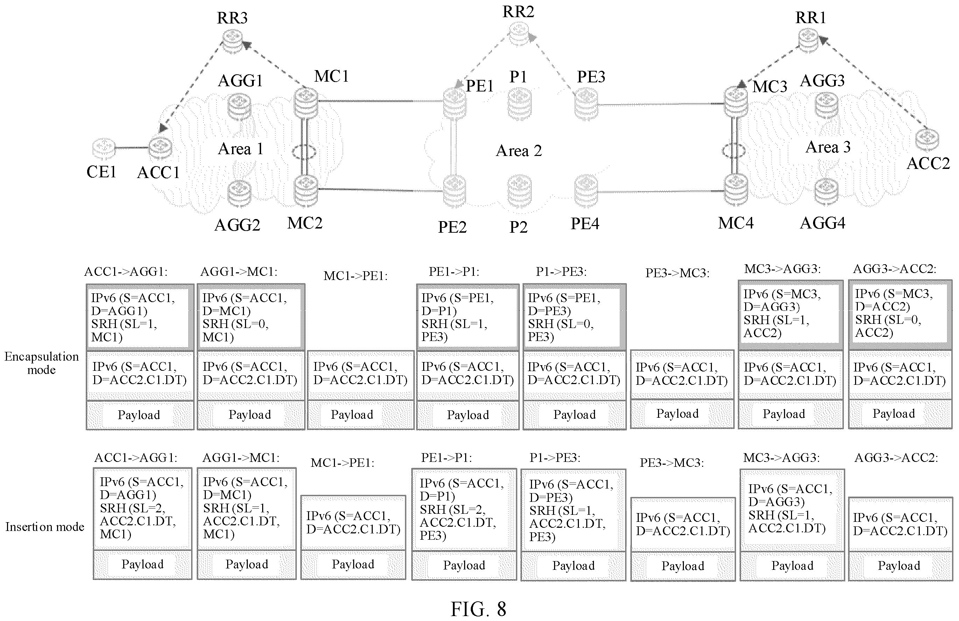

FIG. 8 is a schematic diagram of an example application scenario according to an embodiment of this application.

As shown in FIG. 8, after receiving a payload from the CE1, the ACC1 determines a VPN SID1 (corresponding to ACC2.C1.DT shown in FIG. 8) of the ACC2. Further, the ACC1 determines forwarding information of a path ACC1-AGG1-MC1 in the area 1 based on the VPN SID1, for example, determines a SID list indicating the path ACC1-AGG1-MC1.

In an encapsulation mode, the ACC1 encapsulates a packet based on the SID list indicating the path ACC1-AGG1-MC1 and the VPN SID1. An SRv6 header of the packet includes the SID list indicating the path ACC1-AGG1-MC1, and a destination address included in an IPv6 basic header of the packet is the VPN SID1.

After the ACC1 forwards the packet to the MC1, the MC1 removes the SRv6 header from the packet and forwards the packet to the PE1. After receiving the packet, the PE1 obtains forwarding information of a forwarding path in the area 2 based on the destination address VPN SID1, further encapsulates the packet based on the forwarding information of the forwarding path in the area 2 to obtain a packet including the VPN SID1 and the forwarding information of the forwarding path in the area 2, and sends the packet to the PE3. A manner in which the PE1 encapsulates a packet is similar to a manner in which the ACC1 encapsulates a packet, and details are not described herein.

After the PE1 forwards the packet to the PE3, the PE3 removes the SRv6 header from the packet and forwards the packet to the MC3. After receiving the packet, the MC3 obtains forwarding information of a forwarding path in the area 3 based on the destination address VPN SID1, further encapsulates the packet based on the forwarding information of the forwarding path in the area 3 to obtain a packet including the VPN SID1 and the forwarding information of the forwarding path in the area 3, and sends the packet to the ACC2. A manner in which the MC3 encapsulates a packet is similar to a manner in which the ACC1 encapsulates a packet, and details are not described herein.

It can be learned from comparison between the encapsulation mode shown in FIG. 8 and the encapsulation mode shown in FIG. 1b that in this solution, two SRv6 headers do not need to be encapsulated, and packet encapsulation is simpler. In addition, according to this solution, two SIDs of the ACC2 do not need to be encapsulated, and only one SID (that is, ACC2.C1.DT) of the ACC2 needs to be encapsulated.

In an insertion mode, an SRH in the SRv6 header of the packet encapsulated by the ACC1 based on the SID list indicating the path ACC1-AGG1-MC1 and the VPN SID1 includes both the SID list indicating the path ACC1-AGG1-MC1 and the VPN SID1 (corresponding to ACC2.C1.DT in FIG. 8, where ACC2.C1.DT is a VPN SID allocated by the ACC2 based on a service intent).

After the ACC1 forwards the packet to the MC1, the MC1 removes the SRH, modifies the destination address of the packet to the last SID (ACC2.C1.DT) in the SRH, and forwards the packet to the PE1. After receiving the packet, the PE1 obtains forwarding information of a forwarding path in the area 2 based on the destination address ACC2.C1.DT, further encapsulates the packet based on the forwarding information of the forwarding path in the area 2 to obtain a packet including the VPN SID1 and the forwarding information of the forwarding path in the area 2, and sends the packet to the PE3. A manner in which the PE1 encapsulates a packet is similar to a manner in which the ACC1 encapsulates a packet, and details are not described herein.

After the PE1 forwards the packet to the PE3, the PE3 removes the SRH from the packet and forwards the packet to the MC3. After receiving the packet, the MC3 obtains forwarding information of a forwarding path in the area 3 based on the destination address ACC2.C1.DT, further encapsulates the packet based on the forwarding information of the forwarding path in the area 3 to obtain a packet including the VPN SID1 and the forwarding information of the forwarding path in the area 3, and sends the packet to the ACC2. A manner in which the MC3 encapsulates a packet is similar to a manner in which the ACC1 encapsulates a packet, and details are not described herein.

It can be learned from comparison between the insertion mode shown in FIG. 8 and the insertion mode shown in FIG. 1b that, according to this solution, a packet may be encapsulated in an encapsulation manner that complies with the SRv6 basic specification, that is, "one IPv6 basic header+one SRH".

In an example, in the scenario shown in FIG. 8, the first communication apparatus may correspond to, for example, the ACC1. In this case, the first target path may correspond to the forwarding path ACC1-AGG1-MC1 in the area 1.

In another example, in the scenario shown in FIG. 8, the first communication apparatus may correspond to, for example, the PE1. In this case, the first target path may correspond to a forwarding path PE1-P1-PE3 in the area 2.

In still another example, in the scenario shown in FIG. 8, the first communication apparatus may correspond to, for example, the MC3. In this case, the first target path may correspond to a forwarding path MC3-AGG3-ACC2 in the area 3.

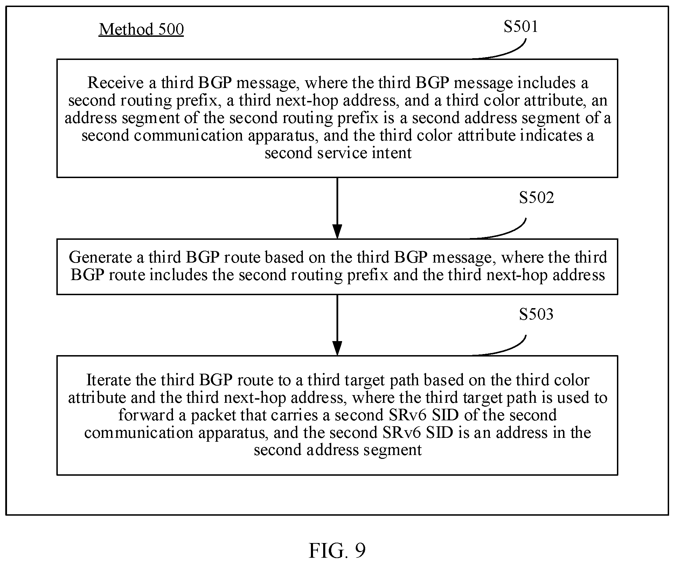

In an example, in a route advertisement and route processing phase, the first communication apparatus may further perform a method 500 shown in FIG. 9. FIG. 9 is a schematic flowchart of another communication method according to an embodiment of this application.

In an example, the method 500 may include, for example, steps S501 to S503 in the following.

S501: Receive a third BGP message, where the third BGP message includes a second routing prefix, a third next-hop address, and a third color attribute, an address segment of the second routing prefix is a second address segment of a second communication apparatus, and the third color attribute indicates a second service intent.

S502: Generate a third BGP route based on the third BGP message, where the third BGP route includes the second routing prefix and the third next-hop address.

S503: Iterate the third BGP route to a third target path based on the third color attribute and the third next-hop address, where the third target path is used to forward a packet that carries a second SRv6 SID of the second communication apparatus, and the second SRv6 SID is an address in the second address segment.

In an example, the second SRv6 SID is a second SRv6 VPN SID.

In an example, the second address segment is an address segment allocated by the second communication apparatus based on the second service intent, and the second SRv6 SID is a SID allocated by the second communication apparatus based on the second service intent.

In an example, an SRv6 locator address segment of the second communication apparatus is divided into a plurality of different address sub-segments, and the plurality of different address sub-segments include a first address segment and the second address segment.

In an example, the first address segment is a first SRv6 locator address segment of the second communication apparatus, and the second address segment is a second SRv6 locator address segment of the second communication apparatus.

According to the method 300 and the method 500, when the second communication apparatus is configured with services corresponding to different service intents, address segment division may be performed on the second communication apparatus. A first service intent corresponds to the first address segment, and the second service intent corresponds to the second address segment. In this way, the first communication apparatus can forward service data corresponding to the first service intent through a first target path, and forward service data corresponding to the second service intent through the third target path.

In an example, if the first communication apparatus corresponds to the ACC1 shown in FIG. 1a, the first communication apparatus may further receive a second SRv6 service route advertised by the second communication apparatus. The second SRv6 service route includes the second SRv6 SID. After receiving the second SRv6 service route, the first communication apparatus may iterate to the third BGP route based on the second SRv6 SID because the second SRv6 SID is an address in the second address segment. Because the third BGP route is iterated to the third target path, after iterating the third BGP route based on the second SRv6 SID, the first communication apparatus may obtain second forwarding information of the third target path. For example, a second correspondence between the second forwarding information and the second SRv6 SID is delivered to a forwarding plane for storage. In a packet forwarding phase, the first communication apparatus may determine the second forwarding information corresponding to the second SRv6 SID based on the second correspondence, to further encapsulate a packet including the second SRv6 SID and the second forwarding information.

The second forwarding information described herein may be information that indicates the third target path. For example, when the third target path is an SRv6 policy, the first forwarding information may be a SID list indicating the third target path.

In an example, the second SRv6 service route may be a second SRv6 VPN route.

In another example, if the first communication apparatus corresponds to the ACC1 shown in FIG. 1a, the first communication apparatus may further receive second information sent by a controller. The second information includes the second SRv6 SID. After receiving the second information, the first communication apparatus may iterate to the third BGP route based on the second SRv6 SID because the second SRv6 SID is an address in the second address segment. Because the third BGP route is iterated to the third target path, after iterating the third BGP route based on the second SRv6 SID, the first communication apparatus may obtain the second forwarding information of the third target path. In an example, the first communication apparatus may store the second forwarding information. For example, the first communication apparatus delivers the second correspondence between the second forwarding information and the second SRv6 SID to a forwarding plane for storage. In the packet forwarding phase, the first communication apparatus may determine the second forwarding information corresponding to the second SRv6 SID based on the second correspondence, to further encapsulate a packet including the second SRv6 SID and the second forwarding information.

In an example, the second SRv6 SID included in the second information may be a second SRv6 VPN SID, a second SRv6 service segment SID, or a second SRv6 binding SID. When the second SRv6 SID is the second SRv6 VPN SID, the second information may be, for example, an SRv6 VPN route. When the second SRv6 SID is the second SRv6 service segment SID or the second SRv6 binding SID, the second information may further include another SID in addition to the second SRv6 SID, and the second SRv6 SID may be the first SID in the second information.

In some embodiments, when the second SRv6 SID is the second SRv6 service segment SID or the second SRv6 binding SID, after configuring the second SRv6 SID, the second communication apparatus may send the second SRv6 SID and related information of the second SRv6 SID to the controller. Correspondingly, the controller may determine the second information based on the received second SRv6 SID and the received related information of the second SRv6 SID, and send the second information to the first communication apparatus.

When the second SRv6 SID is the second SRv6 service segment SID, the related information of the second SRv6 SID may be, for example, service attribute information. When the second SRv6 SID is the second SRv6 binding SID, the related information of the second SRv6 SID may be, for example, information about a tunnel bound to the binding SID.

In an example, after receiving the third BGP message, the first communication apparatus may obtain a fourth BGP message based on the third BGP message, where the fourth BGP message is used to advertise a fourth BGP route; and send the fourth BGP message to a third communication apparatus. In an example, next hop information in the fourth BGP message is modified to information about the first communication apparatus. In a specific example, the first communication apparatus may modify the third next hop, and modify the third next hop to a fourth next hop. The fourth next hop is an IP address of the first communication apparatus. In another example, color values corresponding to a same service intent are different for different domains. Therefore, the first communication apparatus may further modify the third color attribute to a fourth color attribute. The fourth color attribute indicates the second service intent in a domain of the third communication apparatus. For the first communication apparatus and the third communication apparatus, an example is used herein for description: The first communication apparatus corresponds to the MC3 shown in FIG. 1a, and the third communication apparatus may correspond to the PE3 shown in FIG. 1a. That is, the ACC2 sends the third BGP message to the MC3, and the MC3 obtains the fourth BGP message based on the third BGP message, and sends the fourth BGP message to the PE3.

In an example, the fourth BGP message may indicate the third communication apparatus to iterate the fourth BGP route to a fourth target path based on the fourth color attribute and the fourth next-hop address. The fourth target path is used to forward a packet that carries the second SRv6 SID. In this case, for a packet that carries the second SRv6 SID, the packet may be forwarded between border nodes in two different domains, that is, between the third communication apparatus and the first communication apparatus (for example, between the PE3 and the MC3), or may be forwarded based on the fourth target path that matches the fourth color attribute, to effectively ensure that a service intent can be met when the service packet is forwarded between border nodes in different domains.

In an example, the fourth BGP message may include third indication information, and the third indication information indicates the third communication apparatus to iterate the fourth BGP route to the fourth target path based on the fourth color attribute and the fourth next-hop address.

In an example, a conventional BGP route message may be extended, and a new BGP route attribute may be extended to carry the third indication information. In other words, in an example, the fourth BGP message may include a newly extended BGP route attribute, and the newly extended BGP route attribute carries the third indication information.

In another example, the color attribute may be extended, to carry the third indication information by using the color attribute. In this case, the fourth color attribute in the fourth BGP message indicates the third communication apparatus to iterate the fourth BGP route to the fourth target path based on the fourth color attribute and the fourth next-hop address. For a structure of the fourth color attribute that carries the third indication information, refer to FIG. 6 for understanding. Details are not described herein again.

Next, from a perspective of packet forwarding, how the first communication apparatus forwards a packet based on the third target path is described.

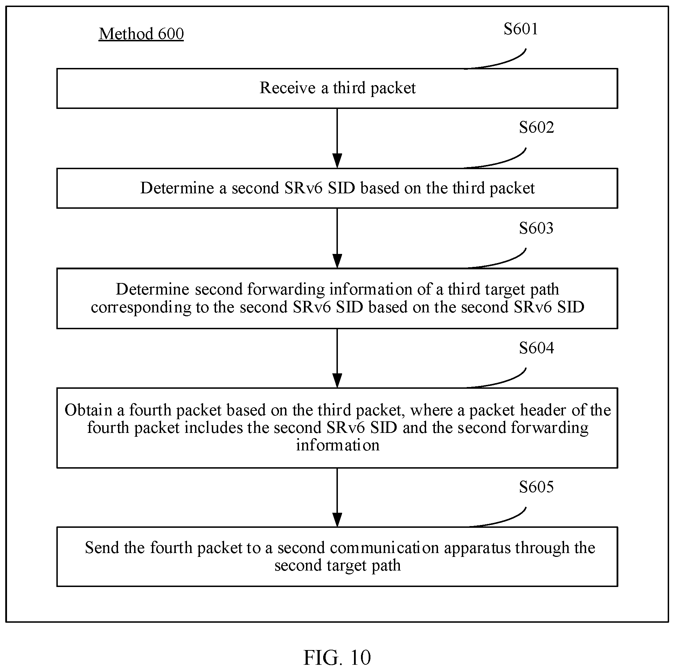

FIG. 10 is a schematic flowchart of a packet forwarding method according to an embodiment of this application. The packet forwarding method 600 shown in FIG. 10 may include, for example, S601 to S605 in the following.

In an example, the method 600 may include, for example, S601 to S605 in the following.

S601: Receive a third packet.

In an example, if the first communication apparatus corresponds to the ACC1 shown in FIG. 1a, the third packet may be an IPv4 packet, or may be an IPv6 packet. This is not specifically limited in this embodiment of this application. In this case, a destination IP address of the third packet may be an IP address of a CE4 (not shown in FIG. 1a).

In an example, if the first communication apparatus corresponds to the AGG1, the PE1, the MC3, or the AGG3 shown in FIG. 1a, the third packet may be an IPv6 packet, and a destination address of the third packet may be a second SRv6 SID of a second communication apparatus.

In an example, if the third packet is a packet corresponding to a VPN service, the second SRv6 SID may be a second SRv6 VPN SID of the second communication apparatus.

If the third packet is a packet corresponding to an SFC service, the second SRv6 SID may be a second SRv6 service segment SID, and the second SRv6 service segment SID is used to associate a related operation of a service chain.

The second SRv6 SID may alternatively be a second SRv6 binding SID, and is used for tunnel binding.

S602: Determine the second SRv6 SID based on the third packet.

As described above, if the first communication apparatus corresponds to the ACC1 shown in FIG. 1a, the destination address of the third packet may be the IP address of the CE4. In this case, in an example, if the third packet is a packet corresponding to a VPN service, the first communication apparatus may receive the third packet through an interface corresponding to the VPN service. After receiving the third packet, the first communication apparatus may search a second VRF table corresponding to the interface for receiving the third packet, to obtain the second SRv6 SID.

In an example, the second VRF table may include, for example, a correspondence between the destination address of the third packet and the second SRv6 SID. In this case, the first communication apparatus may search the second VRF table by using the destination address of the third packet as an index, to obtain the second SRv6 SID.

In another example, the second VRF table may include a correspondence between the second SRv6 SID and a prefix that matches the destination address of the third packet. In this case, the first communication apparatus searches the second VRF table by using the destination address of the third packet as an index, and may obtain the second SRv6 SID after determining that the destination address matches a prefix in the second VRF table.

In another example, when the second SRv6 SID is the second SRv6 service segment SID or the second SRv6 binding SID, the first communication apparatus may determine, according to a flow matching rule, second information including the second SRv6 SID, to obtain the second SRv6 SID included in the second information. The flow matching rule may be preconfigured on the first communication apparatus, or may be delivered to the first communication apparatus through control.

As described above, if the first communication apparatus corresponds to the AGG1, the PE1, the MC3, or the AGG3 shown in FIG. 1a, the destination address of the third packet is the second SRv6 SID. In this case, the first communication apparatus may directly determine the destination address of the third packet as the second SRv6 SID.

S603: Determine second forwarding information of a third target path corresponding to the second SRv6 SID based on the second SRv6 SID.

In an example, when the first communication apparatus is the ACC1, as described above, after receiving a second SRv6 service route, the first communication apparatus may iterate a third BGP route based on the second SRv6 SID, and obtain the second forwarding information of the third target path. Therefore, after determining the second SRv6 SID, the first communication apparatus may obtain the second forwarding information.

In another example, when the first communication apparatus is the AGG1, the PE1, the MC3, or the AGG3, the first communication apparatus stores the third BGP route, the third BGP route includes a second routing prefix, and an address segment of the second routing prefix is a second address segment. The second SRv6 SID is an address in the second address segment. Therefore, the third BGP route may be obtained through route matching based on the second SRv6 SID. In other words, the third BGP route may be iterated to based on the second SRv6 SID, and further, the second forwarding information of the third target path obtained through iteration of the third BGP route is obtained.

In an example, the second SRv6 SID may be an SRv6 SID allocated based on a second service intent. For example, the second address segment may be determined based on the second service intent, and then the second SRv6 SID is configured in the second address segment, so that the second SRv6 SID is configured based on the second service intent.

For the second address segment, refer to the foregoing descriptions of the second address segment. Details are not described herein again.

S604: Obtain a fourth packet based on the third packet, where a packet header of the fourth packet includes the second SRv6 SID and the second forwarding information.

After the second SRv6 SID and the second forwarding information are obtained, the third packet may be encapsulated based on the second SRv6 SID and the second forwarding information, to obtain the fourth packet. In an example, the second SRv6 SID and the second forwarding information may be encapsulated into a packet header, to obtain the fourth packet whose packet header includes the second SRv6 SID and the second forwarding information.

In an example, when the third target path is an SRv6 policy, the second SRv6 SID and the second forwarding information may be located in an SRH of the fourth packet.

In an example, when the second SRv6 SID is the second SRv6 service segment SID or the second SRv6 binding SID, the second SRv6 SID may be, for example, a destination address of the fourth packet.

S605: Send the fourth packet to the second communication apparatus through a second target path.

After obtaining the fourth packet, the first communication apparatus may send the fourth packet through the second target path.

For a specific implementation of the method 600, refer to the example descriptions of the method 400 in FIG. 8. Details are not described herein again.

It can be learned from the foregoing descriptions that, according to the solution of this embodiment of this application, address segment division may be performed on the second communication apparatus based on service intents. One address segment corresponds to one service intent. Correspondingly, an SRv6 SID is configured for a service in an address segment corresponding to a service intent, so that service packets of VPN services with different service intents can be forwarded through different paths. For example, the second packet of the first service intent is forwarded through the first target path, and the fourth packet of the second service intent is forwarded through the third target path, to meet service intents of various services.

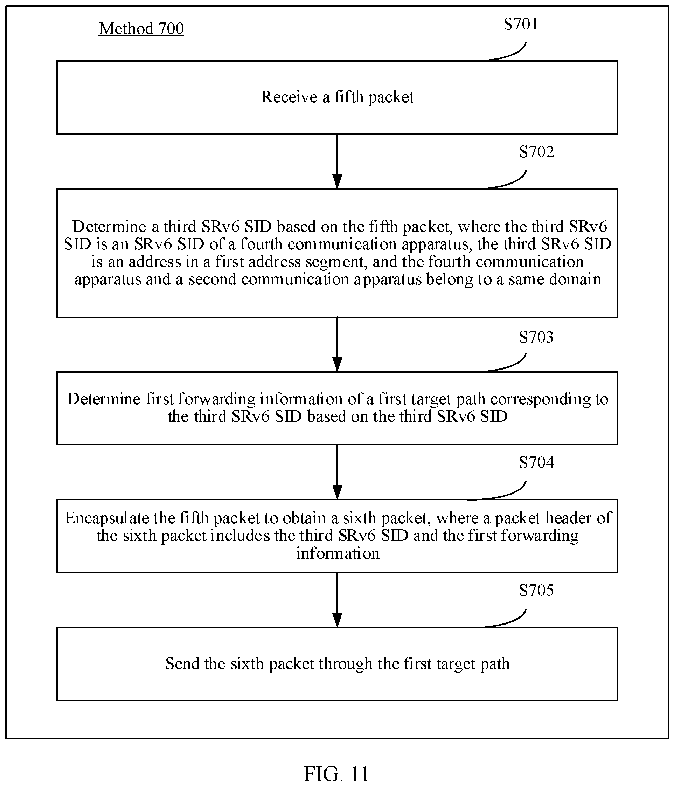

In an example, the first communication apparatus may further perform a method 700 shown in FIG. 11. FIG. 11 is a schematic flowchart of another packet processing method according to an embodiment of this application. The method 700 shown in FIG. 11 may include, for example, S701 to S705 in the following.

S701: Receive a fifth packet.

S702: Determine a third SRv6 SID based on the fifth packet, where the third SRv6 SID is an SRv6 SID of a fourth communication apparatus, the third SRv6 SID is an address in a first address segment, and the fourth communication apparatus and a second communication apparatus belong to a same domain.

S703: Determine the first forwarding information of the first target path corresponding to the third SRv6 SID based on the third SRv6 SID.

S704: Encapsulate the fifth packet to obtain a sixth packet, where a packet header of the sixth packet includes the third SRv6 SID and the first forwarding information.

S705: Send the sixth packet through the first target path.

In an example, if the fifth packet is a VPN service packet, the third SRv6 SID may be a third SRv6 SID of the fourth communication apparatus.

If the fifth packet is a packet corresponding to an SFC service, the third SRv6 SID may be a third SRv6 service segment SID, and the third SRv6 service segment SID is used to associate a related operation of a service chain.

The third SRv6 SID may alternatively be a third SRv6 binding SID, and is used for tunnel binding.

For the method 700, it should be noted that an implementation principle of the method 700 is similar to that of the method 400. Therefore, for a specific implementation of the method 700, refer to related descriptions of the method 400. Details are not described herein again.

A difference between the method 7700 and the method 400 lies in that, although the third SRv6 SID is an SRv6 SID of the fourth communication apparatus, the third SRv6 SID is also an address in the first address segment, and the fourth communication apparatus and the second communication apparatus are located in a same domain. In this case, the first address segment may be an address segment in a domain in which the second communication apparatus is located. In this case, in an example, an egress node of the first target path may be a border node of the domain in which the second communication apparatus is located. After the sixth packet is forwarded to a border node of the domain in which the second communication apparatus is located, the border node may continue to forward the sixth packet to the fourth communication apparatus through a corresponding forwarding path in the domain.

With reference to the scenario shown in FIG. 1a, the solution provided in embodiments of this application is described by using a VPN service as an example.

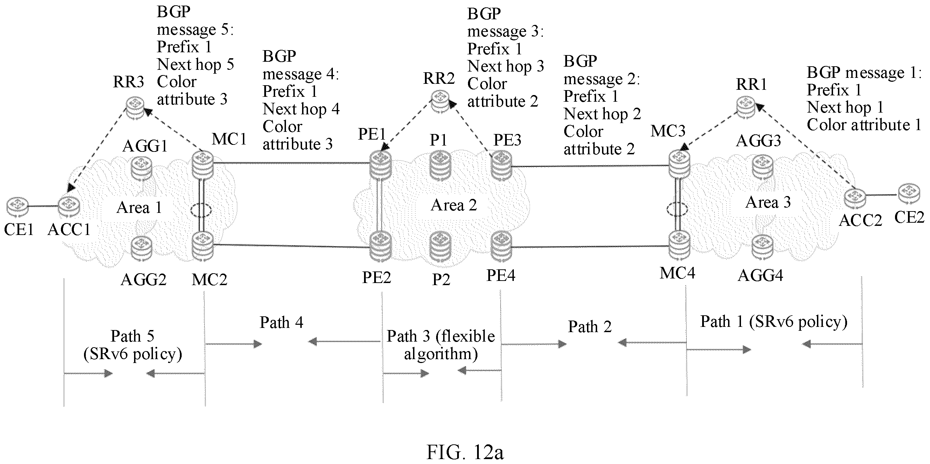

In an example, the solution may be understood with reference to FIG. 12a. FIG. 12a is a schematic diagram of an example application scenario according to an embodiment of this application.

In the scenario shown in FIG. 12a:

An SRv6 policy corresponding to a service intent 1 is pre-established in the area 3, and a path 1 corresponding to the SRv6 policy is MC3-AGG3-ACC2.

A flex-algo path 3 PE1-P1-PE3 corresponding to the service intent 1 is pre-established in the area 2.

An SRv6 policy corresponding to the service intent 1 is pre-established in the area 1, and a path 5 corresponding to the SRv6 policy is ACC1-AGG1-MC1.

In a route advertisement phase:
The ACC2 may advertise a BGP message 1 to the MC3. The BGP message 1 includes a routing prefix 1, a next hop 1, and a color attribute 1, the color attribute 1 corresponds to the service intent 1, and the next hop 1 corresponds to the ACC2.

After receiving the BGP message 1, the MC3 generates a BGP route 1, where the BGP route 1 includes the routing prefix 1 and the next hop 1; and iterates to the path 1 based on the color attribute 1 and the next hop 1, so that the BGP route 1 is iterated to the path 1.

The MC3 may further obtain a BGP message 2 based on the BGP message 1, and send the BGP message 2 to the PE3. The BGP message 2 includes the routing prefix 1, a next hop 2, and a color attribute 2, the color attribute 2 corresponds to the service intent 1, and the next hop 2 corresponds to the MC3.

In an example, after receiving the BGP message 2, the PE3 generates a BGP route 2. The BGP route 2 includes the routing prefix 1 and the next hop 2.

The PE3 may further obtain a BGP message 3 based on the BGP message 2, and send the BGP message 3 to the PE1. The BGP message 3 includes the routing prefix 1, a next hop 3, and the color attribute 2, the color attribute 2 corresponds to the service intent 1, and the next hop 3 corresponds to the PE3.

After receiving the BGP message 3, the PE1 generates a BGP route 3, where the BGP route 3 includes the routing prefix 1 and the next hop 3; and iterates to the path 3 based on the color attribute 2 and the next hop 3, so that the BGP route 3 is iterated to the path 3.

The PE1 may further obtain a BGP message 4 based on the BGP message 3, and send the BGP message 4 to the MC1. The BGP message 4 includes the routing prefix 1, a next hop 4, and a color attribute 3, the color attribute 3 corresponds to the service intent 1, and the next hop 4 corresponds to the PE1.

In an example, after receiving the BGP message 4, the MC1 generates a BGP route 4. The BGP route 4 includes the routing prefix 1 and the next hop 4.

The MC1 may further obtain a BGP message 5 based on the BGP message 4, and send the BGP message 5 to the ACC1. The BGP message 5 includes the routing prefix 1, a next hop 5, and the color attribute 3, the color attribute 3 corresponds to the service intent 1, and the next hop 5 corresponds to the MC1.

After receiving the BGP message 5, the ACC1 generates a BGP route 5, where the BGP route 5 includes the routing prefix 1 and the next hop 5; and iterates to the path 5 based on the color attribute 3 and the next hop 5, so that the BGP route 5 is iterated to the path 5.

In addition, the ACC2 may further advertise a VPN route 1 to the ACC1. The VPN route 1 includes an SRv6 VPN SID1, and the SRv6 VPN SID1 is an address in an address segment corresponding to the prefix 1.

After receiving the VPN route 1, the ACC1 may iterate to the BGP route 5 based on the SRv6 VPN SID 1, and correspondingly, obtain a correspondence between the SRv6 VPN SID 1 and the path 5.

In a packet forwarding phase:
After receiving a packet from the CE1, the ACC1 searches a VRF table to obtain the SRv6 VPN SID1, performs packet encapsulation based on the SRv6 VPN SID1 and the path 5, and forwards the packet to the MC1 through the path 5. For packet encapsulation performed by the ACC1, refer to the foregoing descriptions in FIG. 8a. Details are not described herein again.

The MC1 forwards the packet to the PE1 in a common IPv6 forwarding manner based on the SRv6 VPN SID1 (destination address) in the received packet. For example, the MC1 forwards the packet to the PE1 through a path 4.

After receiving the packet, the PE1 iterates to the BGP route 3 based on the SRv6 VPN SID1 (destination address) in the received packet, to obtain the path 3. The PE1 performs packet encapsulation based on the SRv6 VPN SID1 and forwarding information of the path 3, and forwards the packet to the PE3 through the path 3.

After receiving the packet, the PE3 forwards the packet to the MC3 in the common IPv6 forwarding manner. For example, the PE3 forwards the packet to the MC3 through a path 2.

After receiving the packet, the MC3 iterates to the BGP route 1 based on the SRv6 VPN SID1 (destination address) in the received packet, to obtain the path 1. The PE3 performs packet encapsulation based on the SRv6 VPN SID1 and forwarding information of the path 1, and forwards the packet to the ACC2 through the path 1.

In an example, if a path (for example, the path 2 corresponding to a VXLAN tunnel) corresponding to the service intent 1 is pre-established between the PE3 and the MC3, in the route advertisement phase, after receiving the BGP message 2, the PE3 may iterate the BGP route 2 to the path 2 based on the color attribute 2 and the next hop 2. Correspondingly, in the packet forwarding phase, after receiving a packet, the PE3 iterates to the BGP route 2 based on a destination address (SRv6 VPN SID1) of the packet, obtains forwarding information of the path 2, performs packet encapsulation based on the forwarding information of the path 2, and forwards the packet to the MC3 through the path 2 corresponding to the service intent 1.

In another example, if a path (for example, the path 4 corresponding to a VXLAN tunnel) corresponding to the service intent 1 is pre-established between the MC1 and the PE1, in the route advertisement phase, after receiving the BGP message 4, the MC1 may iterate the BGP route 4 to the path 4 based on the color attribute 3 and the next hop 4. Correspondingly, in the packet forwarding phase, after receiving a packet, the MC1 iterates to the BGP route 4 based on a destination address (SRv6 VPN SID1) of the packet, obtains forwarding information of the path 4, performs packet encapsulation based on the forwarding information of the path 4, and forwards the packet to the PE1 through the path 4 corresponding to the service intent 1.

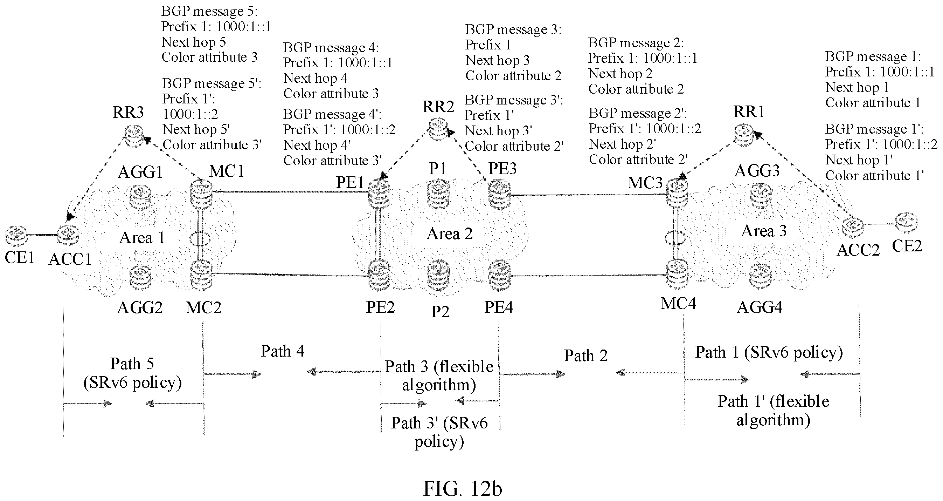

In another example, the solution may be understood with reference to FIG. 12b. FIG. 12b is a schematic diagram of another example application scenario according to an embodiment of this application.

In the scenario shown in FIG. 12b:
An SRv6 policy corresponding to a service intent 1 is pre-established in an area 3, and a path 1 corresponding to the SRv6 policy is MC3-AGG3-ACC2.

A flex-algo path 3 PE1-P1-PE3 corresponding to the service intent 1 is pre-established in an area 2.

An SRv6 policy corresponding to the service intent 1 is pre-established in an area 1, and a path 5 corresponding to the SRv6 policy is ACC1-AGG1-MC1.

In addition, a flex-algo path 1 corresponding to a service intent 2 is pre-established in the area 3, and a path 1 corresponding to the SRv6 policy may be, for example, MC3-MC4-AGG4-ACC2.

An SRv6 policy corresponding to the service intent 2 is pre-established in the area 2.

In a route advertisement phase:
In addition to the route advertisement procedure in FIG. 12a, the ACC2 may further advertise a BGP message 1' to the MC3. The BGP message 1' includes a routing prefix 1', a next hop 1', and a color attribute 1', the color attribute 1' corresponds to the service intent 2, and the next hop 1' corresponds to the ACC2.

After receiving the BGP message 1', the MC3 generates a BGP route 1', where the BGP route 1' includes the routing prefix 1' and the next hop 1'; and iterates to the path 1' based on the color attribute 1' and the next hop 1', so that the BGP route 1' is iterated to the path 1'.

The MC3 may further obtain a BGP message 2' based on the BGP message 1', and send the BGP message 2' to the PE3. The BGP message 2' includes the routing prefix 1, a next hop 2', and a color attribute 2', the color attribute 2' corresponds to the service intent 2, and the next hop 2' corresponds to the MC3.

In an example, after receiving the BGP message 2', the PE3 generates a BGP route 2'. The BGP route 2' includes the routing prefix 1' and the next hop 2'.

The PE3 may further obtain a BGP message 3' based on the BGP message 2', and send the BGP message 3' to the PE1. The BGP message 3' includes the routing prefix 1', a next hop 3', and the color attribute 2', the color attribute 2' corresponds to the service intent 2, and the next hop 3' corresponds to the PE3.

After receiving the BGP message 3', the PE1 generates a BGP route 3', where the BGP route 3' includes the routing prefix 1' and the next hop 3'; and iterates to the path 3' based on the color attribute 2' and the next hop 3', so that the BGP route 3' is iterated to the path 3'.

The PE1 may further obtain a BGP message 4' based on the BGP message 3', and send the BGP message 4' to the MC1. The BGP message 4' includes the routing prefix 1', a next hop 4', and a color attribute 3', the color attribute 3' corresponds to the service intent 2, and the next hop 4' corresponds to the PE1.

In an example, after receiving the BGP message 4', the MC1 generates a BGP route 4'. The BGP route 4' includes the routing prefix 1' and the next hop 4'.

The MC1 may further obtain a BGP message 5' based on the BGP message 4', and send the BGP message 5' to the ACC1. The BGP message 5' includes the routing prefix 1', a next hop 5', and the color attribute 3', the color attribute 3' corresponds to the service intent 2, and the next hop 5' corresponds to the MC1.

After receiving the BGP message 5', the ACC1 generates a BGP route 5'. The BGP route 5' includes the routing prefix 1' and the next hop 5'.

In addition, the ACC2 may further advertise a VPN route 2 to the ACC1. The VPN route 2 includes an SRv6 VPN SID2, and the SRv6 VPN SID2 is an address in an address segment corresponding to the prefix 1'.

In a packet forwarding phase:
In addition to the packet forwarding procedure in FIG. 12a, the ACC1 may further receive a packet corresponding to a VPN2, and after receiving the packet corresponding to the VPN2, search a VRF table to obtain the SRv6 VPN SID2, perform packet encapsulation based on the SRv6 VPN SID1, where the SRv6 VPN SID2 is used as a destination address of the encapsulated packet, and forward the packet to the MC1 in a common IPv6 forwarding manner.

The MC1 forwards the packet to the PE1 in a common IPv6 forwarding manner based on the SRv6 VPN SID2 (destination address) in the received packet. For example, the MC1 forwards the packet to the PE1 through a path 4.

After receiving the packet, the PE1 iterates to the BGP route 3' based on the SRv6 VPN SID2 (destination address) in the received packet, to obtain the path 3'. The PE1 performs packet encapsulation based on the SRv6 VPN SID2 and forwarding information of the path 3', and forwards the packet to the PE3 through the path 3'.

After receiving the packet, the PE3 forwards the packet to the MC3 in the common IPv6 forwarding manner. For example, the PE3 forwards the packet to the MC3 through a path 2.

After receiving the packet, the MC3 iterates to the BGP route 1' based on the SRv6 VPN SID2 (destination address) in the received packet, to obtain the path 1'. The PE3 performs packet encapsulation based on the SRv6 VPN SID2 and forwarding information of the path 1', and forwards the packet to the ACC2 through the path 1'.

For the prefix 1 and the prefix 1', in FIG. 12b, an example in which the prefix 1 is 1000:1::1 and the prefix 1' is 1000:1::2 is used for description. 1000:1::1 and 1000: 1::2 may be two address segments in the locator of the ACC2.

In another example, the prefix 1 and the prefix 1' may also be two different locators of the ACC2. For example, the prefix 1 is 1000: 1:: 1, and the prefix 1' is 1001:1::1.

For details, refer to the foregoing descriptions of the first address segment and the second address segment. For example, the prefix 1 may correspond to the first address segment, and the prefix 2 may correspond to the second address segment. Details are not described herein.

It can be learned from FIG. 12a and FIG. 12b that, according to the solution in embodiments of this application, for VPN services with different service intents, a packet of a VPN service may be transmitted in each area based on a service intent and path planning in the area.

In addition, in another example, it is assumed that the area 3 further includes an ACC3, and a VPN service corresponding to the service intent 1 is deployed on the ACC3. In this case, the same as the ACC2, the ACC2 may also perform the route advertisement process performed by the ACC2 as described in FIG. 12a. In this case, a VPN SID included in a VPN route advertised by the ACC3 to the ACC1 may also be a SID in the address segment corresponding to the prefix 1. Correspondingly, in a packet forwarding phase, in an example, the ACC1 may also forward the packet to the MC1 through an SRv6 policy (the path 5) in the area 1. Similarly, in the area 2, the PE1 may also forward the packet to the PE3 through the flex-algo path 3 in the area 2. In this case, the prefix 1 may, for example, correspond to an address segment of an area level (for example, the area 3).

An embodiment of this application provides a second communication apparatus. The second communication apparatus includes a transceiver unit and a processing unit. The transceiver unit is configured to perform a receiving operation and/or a sending operation performed by the second communication apparatus according to any one of the foregoing method embodiments. The processing unit is configured to perform an operation other than the receiving operation and/or the sending operation performed by the second communication apparatus according to any one of the foregoing method embodiments.

In a specific example, the second communication apparatus includes:
a sending unit, configured to send a first border gateway protocol BGP message to a third communication apparatus, where the first BGP message includes a first routing prefix, a first next-hop address, and a first color attribute, an address segment of the first routing prefix is a first address segment of the second communication apparatus, and the first color attribute indicates a first service intent.

The sending unit is further configured to advertise a first segment routing internet protocol version 6 SRv6 service route to a first communication apparatus. The first SRv6 service route includes a first SRv6 segment identifier SID of the second communication apparatus, the first SRv6 SID is an address in the first address segment, and the second communication apparatus and the first communication apparatus belong to different domains.

In a possible implementation, the first SRv6 service route is a first SRv6 virtual private network VPN route, and the first SRv6 SID is a first SRv6 VPN SID.

In a possible implementation, the sending unit is further configured to:
send a second BGP message to the third communication apparatus, where the second BGP message includes a second routing prefix, a second next-hop address, and a second color attribute, an address segment of the second routing prefix is a second address segment of the second communication apparatus, and the second color attribute indicates a second service intent; and
advertise a second SRv6 service route to the first communication apparatus, where the second SRv6 service route includes a second SRv6 SID, and the second SRv6 SID is an address in the second address segment.

In a possible implementation, the second SRv6 service route is a second SRv6 VPN route, and the second SRv6 SID is a second SRv6 VPN SID.

In a possible implementation, a first SRv6 locator address segment of the second communication apparatus includes a plurality of different address sub-segments, and the plurality of different address sub-segments include the first address segment and the second address segment.

In a possible implementation, the first address segment is a first SRv6 locator address segment of the second communication apparatus, and the second address segment is a second SRv6 locator address segment of the second communication apparatus.

In a possible implementation, an SRv6 locator address segment of the second communication apparatus includes a plurality of different address sub-segments, and the plurality of different address sub-segments include the first address segment.

In a possible implementation, the first address segment is a first SRv6 locator address segment of the second communication apparatus.

In a possible implementation, the first communication apparatus belongs to a first domain, both the second communication apparatus and the third communication apparatus belong to a second domain, the first communication apparatus is connected to the second communication apparatus through the third communication apparatus, the second communication apparatus and the third communication apparatus are border nodes of the second domain, and the first communication apparatus is a border node of the first domain.

An embodiment of this application provides a first communication apparatus. The apparatus includes a transceiver unit and a processing unit. The transceiver unit is configured to perform a receiving operation and/or a sending operation performed by the first communication apparatus according to the foregoing method embodiments. The processing unit is configured to perform an operation other than the receiving operation and/or the sending operation performed by the first communication apparatus according to the foregoing method embodiments.

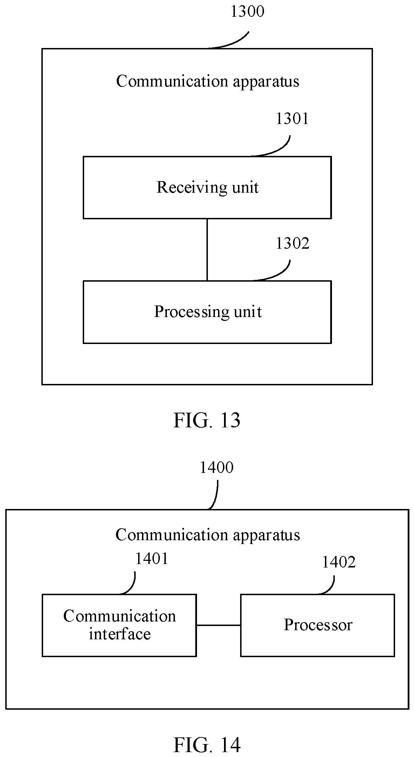

In a specific example, refer to FIG. 13 for understanding. FIG. 13 is a schematic diagram of a structure of the first communication apparatus according to an embodiment of this application. As shown in FIG. 13, the first communication apparatus 1300 includes a receiving unit 1301 and a processing unit 1302.

The receiving unit 1301 is configured to receive a first border gateway protocol BGP message, where the first BGP message includes a first routing prefix, a first next-hop address, and a first color attribute, an address segment of the first routing prefix is a first address segment of a second communication apparatus, and the first color attribute indicates a first service intent.

The processing unit 1302 is configured to generate a first BGP route based on the first BGP message, where the first BGP route includes the first routing prefix and the first next-hop address.

The processing unit 1302 is further configured to iterate the first BGP route to a first target path based on the first color attribute and the first next-hop address, where the first target path is used to forward a packet that carries a first segment routing internet protocol version 6 SRv6 segment identifier SID of the second communication apparatus, and the first SRv6 SID is an address in the first address segment.

In a possible implementation, the first SRv6 SID is a first SRv6 virtual private network VPN SID.

In a possible implementation, the receiving unit 1301 is further configured to receive a first SRv6 service route, where the first SRv6 service route includes the first SRv6 SID. The processing unit 1302 is further configured to iterate the first BGP route based on the first SRv6 SID, and obtain first forwarding information of the first target path.

In a possible implementation, the receiving unit 1301 is further configured to receive first information sent by a controller, where the first information includes the first SRv6 SID. The processing unit 1302 is further configured to iterate the first BGP route based on the first SRv6 SID, and obtain first forwarding information of the first target path.

In a possible implementation, the first SRv6 SID is a first SRv6 VPN SID, the first SRv6 SID is a first SRv6 service service segment segment SID or the first SRv6 SID is a first SRv6 binding binding SID.

In a possible implementation, the apparatus further includes: a sending unit, configured to send a second BGP message to a third communication apparatus, to advertise a second BGP route. The second BGP message includes the first routing prefix, a second next-hop address, and a second color attribute, the second next-hop address is an IP address of the first communication apparatus, and the second color attribute indicates the first service intent.

In a possible implementation, the second BGP message indicates the third communication apparatus to iterate the second BGP route to a second target path based on the second color attribute and the second next-hop address. The second target path is used to forward a packet that carries the first SRv6 SID.

In a possible implementation, the receiving unit 1301 is further configured to receive a third BGP message, where the third BGP message includes a second routing prefix, a third next-hop address, and a third color attribute, an address segment of the second routing prefix is a second address segment of the second communication apparatus, and the third color attribute indicates a second service intent. The processing unit 1302 is further configured to generate a third BGP route based on the third BGP message, where the third BGP route includes the second routing prefix and the third next-hop address. The processing unit 1302 is further configured to iterate the third BGP route to a third target path based on the third color attribute and the third next-hop address, where the third target path is used to forward a packet that carries a second SRv6 SID of the second communication apparatus, and the second SRv6 SID is an address in the second address segment.

In a possible implementation, the second SRv6 SID is a second SRv6 VPN SID.

In a possible implementation, the receiving unit 1301 is further configured to receive a second SRv6 VPN route advertised by the second communication apparatus, where the second SRv6 VPN route includes the second SRv6 VPN SID.

The processing unit 1302 is further configured to iterate the third BGP route based on the second SRv6 VPN SID, and obtain second forwarding information of the third target path.

In a possible implementation, the receiving unit 1301 is further configured to receive second information sent by the controller, where the second information includes the second SRv6 SID. The processing unit 1302 is further configured to iterate the third BGP route based on the second SRv6 SID, and obtain second forwarding information of the third target path.

In a possible implementation, the second SRv6 SID is a second SRv6 VPN SID, the second SRv6 SID is a second SRv6 service service segment segment SID, or the second SRv6 SID is a second SRv6 binding binding SID.

In a possible implementation, the apparatus further includes: a sending unit, configured to send a fourth BGP message to the third communication apparatus, to advertise a fourth BGP route. The fourth BGP message includes the second routing prefix, a fourth next-hop address, and a fourth color attribute, the fourth next-hop address is the IP address of the first communication apparatus, and the fourth color attribute indicates the second service intent.

In a possible implementation, the fourth BGP message indicates the third communication apparatus to iterate the fourth BGP route to a fourth target path based on the fourth color attribute and the fourth next-hop address. The fourth target path is used to forward a packet that carries the second SRv6 SID.

In a possible implementation, the address segment of the second routing prefix is an address segment allocated by the second communication apparatus based on the second service intent, and the second SRv6 SID is a SID allocated by the second communication apparatus based on the second service intent.

In a possible implementation, a first SRv6 locator address segment of the second communication apparatus includes a plurality of different address sub-segments, and the plurality of different address sub-segments include the first address segment and the second address segment.

In a possible implementation, the first address segment is a first SRv6 locator address segment of the second communication apparatus, and the second address segment is a second SRv6 locator address segment of the second communication apparatus.

In a possible implementation, the first target path is one of the following: a segment routing SR internet protocol version 6 policy SRv6 policy, a segment routing internet protocol version 6 flexible algorithm SRv6 flex-algo path, a resource reservation protocol traffic engineering RSVP-TE tunnel, a segment routing multi-protocol label switching policy SR MPLS policy, an SR flex-algo path, a virtual extensible local area network VxLAN tunnel, or a multi-protocol label switching traffic engineering MPLS-TE tunnel.

In a possible implementation, the address segment of the first routing prefix is an address segment allocated by the second communication apparatus based on the first service intent, and the first SRv6 SID is a SID allocated by the second communication apparatus based on the first service intent.

In a possible implementation, an SRv6 locator address segment of the second communication apparatus includes a plurality of different address sub-segments, and the plurality of different address sub-segments include the first address segment.

In a possible implementation, the first address segment is a first SRv6 locator address segment of the second communication apparatus.

In a possible implementation, the receiving unit 1301 is further configured to receive a first packet. The processing unit 1302 is further configured to: determine the first SRv6 SID based on the first packet; determine the first forwarding information of the first target path based on the first SRv6 SID; and obtain a second packet based on the first packet, where a packet header of the second packet includes the first SRv6 SID and the first forwarding information. The sending unit included in the apparatus is configured to send the second packet through the first target path.

In a possible implementation, the first SRv6 SID is a first SRv6 VPN SID, and the determining a first segment routing internet protocol version 6 segment identifier SRv6 SID based on the first packet includes: searching a first virtual routing and forwarding VRF table based on a destination address of the first packet, to determine the first SRv6 VPN SID.

In a possible implementation, the destination address of the first packet is the first SRv6 SID.

In a possible implementation, the receiving unit 1301 is further configured to receive a third packet. The processing unit 1302 is further configured to: determine the second SRv6 SID based on the third packet; determine the second forwarding information of the third target path corresponding to the second SRv6 SID based on the second SRv6 SID; and obtain a fourth packet based on the third packet, where a packet header of the fourth packet includes the second SRv6 SID and the second forwarding information. The sending unit included in the apparatus is configured to send the fourth packet to the second communication apparatus through the third target path.

In a possible implementation, the second SRv6 SID is a second SRv6 VPN SID, and the determining the second SRv6 SID based on the third packet includes: searching a second virtual routing and forwarding VRF table based on a destination address of the third packet, to determine the second VPN SRv6 SID.

In a possible implementation, the destination address of the third packet is the second SRv6 SID.

In a possible implementation, the first communication apparatus belongs to a first domain, the second communication apparatus belongs to a second domain, the first communication apparatus is connected to the second communication apparatus through a third communication apparatus, the first communication apparatus and the third communication apparatus are border nodes of the first domain, the second communication apparatus is a border node of the second domain, and the first communication apparatus and the third communication apparatus are respectively a head node and an egress node of the first target path.

In a possible implementation, the receiving unit 1301 is configured to receive a fifth packet. The processing unit 1302 is configured to: determine the third SRv6 SID based on the fifth packet, where the third SRv6 SID is an SRv6 SID of a fourth communication apparatus, the third SRv6 SID is an address in the first address segment, and the fourth communication apparatus and the second communication apparatus belong to a same domain; determine the first forwarding information of the first target path corresponding to the third SRv6 SID based on the third SRv6 SID; and obtain a sixth packet based on the fifth packet, where a packet header of the sixth packet includes the third SRv6 SID and the first forwarding information. The sending unit included in the apparatus is configured to send the sixth packet through the first target path.

In addition, an embodiment of this application further provides a communication apparatus 1400. FIG. 14 is a schematic diagram of a structure of a communication apparatus according to an embodiment of this application. The communication apparatus 1400 includes a communication interface 1401 and a processor 1402 connected to the communication interface 1401. The communication apparatus 1400 may be configured to perform the method 100, the method 200, the method 300, the method 400, the method 500, the method 600, or the method 700 in the foregoing embodiments.

In an example, the communication apparatus 1400 may perform the method 100 in the foregoing embodiment. When the communication apparatus 1400 is configured to perform the method 100 in the foregoing embodiment, the communication apparatus 1400 is equivalent to the second communication apparatus in the method 100. The communication interface 1401 is configured to perform a transceiver operation performed by the second communication apparatus in the method 100. The processor 1402 is configured to perform an operation other than the transceiver operation performed by the second communication apparatus in the method 100. For example, the communication interface 1401 is configured to: send a first BGP message to a third communication apparatus, where the first BGP message includes a first routing prefix, a first next-hop address, and a first color attribute, an address segment of the first routing prefix is a first address segment of the second communication apparatus, and the first color attribute indicates a first service intent; and advertise a first SRv6 service route to a first communication apparatus, where the first SRv6 service route includes a first SRv6 SID, and the first SRv6 SID is an address in the first address segment. The second communication apparatus and the first communication apparatus belong to different domains. The processor 1402 is configured to obtain the first SRv6 service route.

In an example, the communication apparatus 1400 may perform the method 200 in the foregoing embodiment. When the communication apparatus 1400 is configured to perform the method 200 in the foregoing embodiment, the communication apparatus 1400 is equivalent to the second communication apparatus in the method 200. The communication interface 1401 is configured to perform a transceiver operation performed by the second communication apparatus in the method 200. The processor 1402 is configured to perform an operation other than the transceiver operation performed by the second communication apparatus in the method 200. For example, the communication interface 1401 is configured to: send a second BGP message to a third communication apparatus, where the second BGP message includes a second routing prefix, a second next-hop address, and a second color attribute, an address segment of the second routing prefix is a second address segment of the second communication apparatus, and the second color attribute indicates a second service intent; and advertise a second SRv6 service route to a first communication apparatus, where the second SRv6 service route includes a second SRv6 SID, and the second SRv6 SID is an address in the second address segment. The processor 1402 is configured to obtain the second SRv6 service route.

In an example, the communication apparatus 1400 may perform the method 300 in the foregoing embodiment. When the communication apparatus 1400 is configured to perform the method 300 in the foregoing embodiment, the communication apparatus 1400 is equivalent to the first communication apparatus in the method 300. The communication interface 1401 is configured to perform a transceiver operation performed by the first communication apparatus in the method 300. The processor 1402 is configured to perform an operation other than the transceiver operation performed by the first communication apparatus in the method 300. For example, the communication interface 1401 is configured to receive a first BGP message, where the first BGP message includes a first routing prefix, a first next-hop address, and a first color attribute, an address segment of the first routing prefix is a first address segment of a second communication apparatus, and the first color attribute indicates a first service intent. The processor 1402 is configured to: generate a first BGP route based on the first BGP message, where the first BGP route includes the first routing prefix and the first next-hop address; and iterate the first BGP route to a first target path based on the first color attribute and the first next-hop address, where the first target path is used to forward a packet that carries a first SRv6 SID of the second communication apparatus, and the first SRv6 SID is an address in the first address segment.

In an example, the communication apparatus 1400 may perform the method 400 in the foregoing embodiment. When the communication apparatus 1400 is configured to perform the method 400 in the foregoing embodiment, the communication apparatus 1400 is equivalent to the first communication apparatus in the method 400. The communication interface 1401 is configured to perform a transceiver operation performed by the first communication apparatus in the method 400. The processor 1402 is configured to perform an operation other than the transceiver operation performed by the first communication apparatus in the method 400. For example, the communication interface 1401 is configured to receive a first packet. The processor 1402 is configured to: determine a first SRv6 SID of a second communication apparatus based on the first packet, determine first forwarding information of a first target path based on the first SRv6 SID, and obtain a second packet based on the first packet, where a packet header of the second packet includes the first SRv6 SID and the first forwarding information. The communication interface 1401 is further configured to send the second packet through the first target path.

In an example, the communication apparatus 1400 may perform the method 500 in the foregoing embodiment. When the communication apparatus 1400 is configured to perform the method 500 in the foregoing embodiment, the communication apparatus 1400 is equivalent to the first communication apparatus in the method 500. The communication interface 1401 is configured to perform a transceiver operation performed by the first communication apparatus in the method 500. The processor 1402 is configured to perform an operation other than the transceiver operation performed by the first communication apparatus in the method 500. For example, the communication interface 1401 is configured to receive a third BGP message, where the third BGP message includes a second routing prefix, a third next-hop address, and a third color attribute, an address segment of the second routing prefix is a second address segment of a second communication apparatus, and the third color attribute indicates a second service intent. The processor 1402 is configured to: generate a third BGP route based on the third BGP message, where the third BGP route includes the second routing prefix and the third next-hop address; and iterate the third BGP route to a third target path based on the third color attribute and the third next-hop address, where the third target path is used to forward a packet that carries a second SRv6 SID of the second communication apparatus, and the second SRv6 SID is an address in the second address segment.

In an example, the communication apparatus 1400 may perform the method 600 in the foregoing embodiment. When the communication apparatus 1400 is configured to perform the method 600 in the foregoing embodiment, the communication apparatus 1400 is equivalent to the first communication apparatus in the method 600. The communication interface 1401 is configured to perform a transceiver operation performed by the first communication apparatus in the method 600. The processor 1402 is configured to perform an operation other than the transceiver operation performed by the first communication apparatus in the method 600. For example, the communication interface 1401 is configured to receive a third packet. The processor 1402 is configured to: determine a second SRv6 SID based on the third packet, determine second forwarding information of a third target path corresponding to the second SRv6 SID based on the second SRv6 SID, and obtain a fourth packet based on the third packet, where a packet header of the fourth packet includes the second SRv6 SID and the second forwarding information. The communication interface 1401 is further configured to send the fourth packet to the second communication apparatus through the second target path.

In an example, the communication apparatus 1400 may perform the method 700 in the foregoing embodiment. When the communication apparatus 1400 is configured to perform the method 700 in the foregoing embodiment, the communication apparatus 1400 is equivalent to the first communication apparatus in the method 700. The communication interface 1401 is configured to perform a transceiver operation performed by the first communication apparatus in the method 700. The processor 1402 is configured to perform an operation other than the transceiver operation performed by the first communication apparatus in the method 700. For example, the communication interface 1401 is configured to receive a fifth packet. The processor 1402 is configured to: determine a third SRv6 SID based on the fifth packet, where the third SRv6 SID is an SRv6 SID of a fourth communication apparatus, the third SRv6 SID is an address in the first address segment, the fourth communication apparatus and the second communication apparatus belong to a same domain; determine first forwarding information of the first target path corresponding to the third SRv6 SID based on the third SRv6 SID; and encapsulate the fifth packet to obtain a sixth packet, where the packet header of the sixth packet includes the third SRv6 SID and the first forwarding information. The communication interface 1401 is further configured to send the sixth packet through the first target path.

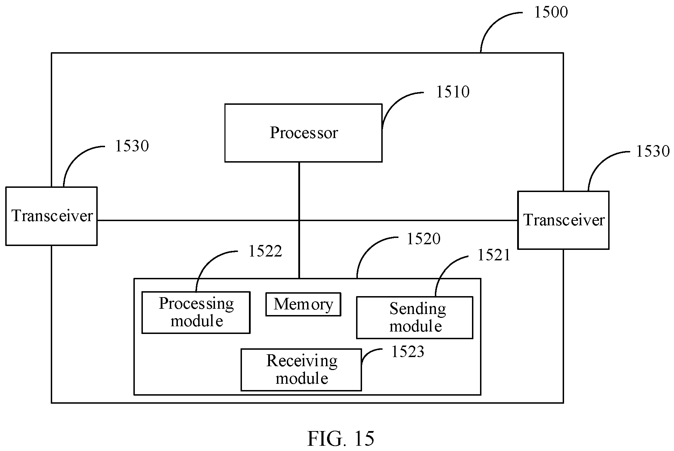

In addition, an embodiment of this application further provides a communication apparatus 1500. FIG. 15 is a schematic diagram of a structure of a communication apparatus according to an embodiment of this application. The communication apparatus 1500 may be configured to perform the method 100, the method 200, the method 300, the method 400, the method 500, the method 600, or the method 700 in the foregoing embodiments.

As shown in FIG. 15, the communication apparatus 1500 may include a processor 1510, a memory 1520 coupled to the processor 1510, and a transceiver 1530. The transceiver 1530 may be, for example, a communication interface or an optical module. The processor 1510 may be a central processing unit (English: central processing unit, CPU for short), a network processor (English: network processor, NP for short), or a combination of a CPU and an NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. The processor 1510 may be one processor, or may include a plurality of processors. The memory 1520 may include a volatile memory (English: volatile memory), for example, a random access memory (English: random-access memory, RAM for short). The memory may further include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). The memory 1520 may further include a combination of the foregoing memories. The memory 1520 may be one memory, or may include a plurality of memories. In an implementation, the memory 1520 stores computer-readable instructions. The computer-readable instructions include a plurality of software modules, for example, a sending module 1521, a processing module 1522, and a receiving module 1523. After executing each software module, the processor 1510 may perform a corresponding operation as indicated by each software module. In this embodiment, an operation performed by a software module is actually the operation performed by the processor 1510 based on the indication of the software module.

In an example, the communication apparatus 1500 may perform the method 100 in the foregoing embodiment. When the communication apparatus 1500 is configured to perform the method 100 in the foregoing embodiment, the communication apparatus 1500 is equivalent to the second communication apparatus in the method 100. The transceiver 1530 is configured to perform a transceiver operation performed by the second communication apparatus in the method 100. The processor 1510 is configured to perform an operation other than the transceiver operation performed by the second communication apparatus in the method 100. For example, the transceiver 1530 is configured to: send a first BGP message to a third communication apparatus, where the first BGP message includes a first routing prefix, a first next-hop address, and a first color attribute, an address segment of the first routing prefix is a first address segment of the second communication apparatus, and the first color attribute indicates a first service intent; and advertise a first SRv6 service route to a first communication apparatus, where the first SRv6 service route includes a first SRv6 SID, and the first SRv6 SID is an address in the first address segment. The second communication apparatus and the first communication apparatus belong to different domains. The processor 1510 is configured to obtain the first SRv6 service route.

In an example, the communication apparatus 1500 may perform the method 200 in the foregoing embodiment. When the communication apparatus 1500 is configured to perform the method 200 in the foregoing embodiment, the communication apparatus 1500 is equivalent to the second communication apparatus in the method 200. The transceiver 1530 is configured to perform a transceiver operation performed by the second communication apparatus in the method 200. The processor 1510 is configured to perform an operation other than the transceiver operation performed by the second communication apparatus in the method 200. For example, the transceiver 1530 is configured to: send a second BGP message to a third communication apparatus, where the second BGP message includes a second routing prefix, a second next-hop address, and a second color attribute, an address segment of the second routing prefix is a second address segment of the second communication apparatus, and the second color attribute indicates a second service intent; and advertise a second SRv6 service route to the first communication apparatus, where the second SRv6 service route includes a second SRv6 SID, and the second SRv6 SID is an address in the second address segment. The processor 1510 is configured to obtain the second SRv6 service route.

In an example, the communication apparatus 1500 may perform the method 300 in the foregoing embodiment. When the communication apparatus 1500 is configured to perform the method 300 in the foregoing embodiment, the communication apparatus 1500 is equivalent to the first communication apparatus in the method 300. The transceiver 1530 is configured to perform a transceiver operation performed by the first communication apparatus in the method 300. The processor 1510 is configured to perform an operation other than the transceiver operation performed by the first communication apparatus in the method 300. For example, the transceiver 1530 is configured to receive a first BGP message, where the first BGP message includes a first routing prefix, a first next-hop address, and a first color attribute, an address segment of the first routing prefix is a first address segment of a second communication apparatus, and the first color attribute indicates a first service intent. The processor 1510 is configured to: generate a first BGP route based on the first BGP message, where the first BGP route includes the first routing prefix and the first next-hop address; and iterate the first BGP route to a first target path based on the first color attribute and the first next-hop address, where the first target path is used to forward a packet that carries a first SRv6 SID of the second communication apparatus, and the first SRv6 SID is an address in the first address segment.

In an example, the communication apparatus 1500 may perform the method 400 in the foregoing embodiment. When the communication apparatus 1500 is configured to perform the method 400 in the foregoing embodiment, the communication apparatus 1500 is equivalent to the first communication apparatus in the method 400. The transceiver 1530 is configured to perform a transceiver operation performed by the first communication apparatus in the method 400. The processor 1510 is configured to perform an operation other than the transceiver operation performed by the first communication apparatus in the method 400. For example, the transceiver 1530 is configured to receive a first packet. The processor 1510 is configured to: determine a first SRv6 SID of a second communication apparatus based on the first packet, determine first forwarding information of a first target path based on the first SRv6 SID, and obtain a second packet based on the first packet, where a packet header of the second packet includes the first SRv6 SID and the first forwarding information. The transceiver 1530 is further configured to send the second packet through the first target path.

In an example, the communication apparatus 1500 may perform the method 500 in the foregoing embodiment. When the communication apparatus 1500 is configured to perform the method 500 in the foregoing embodiment, the communication apparatus 1500 is equivalent to the first communication apparatus in the method 500. The transceiver 1530 is configured to perform a transceiver operation performed by the first communication apparatus in the method 500. The processor 1510 is configured to perform an operation other than the transceiver operation performed by the first communication apparatus in the method 500. For example, the transceiver 1530 is configured to receive a third BGP message, where the third BGP message includes a second routing prefix, a third next-hop address, and a third color attribute, an address segment of the second routing prefix is a second address segment of a second communication apparatus, and the third color attribute indicates a second service intent. The processor 1510 is configured to: generate a third BGP route based on the third BGP message, where the third BGP route includes the second routing prefix and the third next-hop address; and iterate the third BGP route to a third target path based on the third color attribute and the third next-hop address, where the third target path is used to forward a packet that carries a second SRv6 SID of the second communication apparatus, and the second SRv6 SID is an address in the second address segment.

In an example, the communication apparatus 1500 may perform the method 600 in the foregoing embodiment. When the communication apparatus 1500 is configured to perform the method 600 in the foregoing embodiment, the communication apparatus 1500 is equivalent to the first communication apparatus in the method 600. The transceiver 1530 is configured to perform a transceiver operation performed by the first communication apparatus in the method 600. The processor 1510 is configured to perform an operation other than the transceiver operation performed by the first communication apparatus in the method 600. For example, the transceiver 1530 is configured to receive a third packet. The processor 1510 is configured to: determine a second SRv6 SID based on the third packet, determine second forwarding information of a third target path corresponding to the second SRv6 SID based on the second SRv6 SID, and obtain a fourth packet based on the third packet, where a packet header of the fourth packet includes the second SRv6 SID and the second forwarding information. The transceiver 1530 is further configured to send the fourth packet to the second communication apparatus through the second target path.

In an example, the communication apparatus 1500 may perform the method 700 in the foregoing embodiment. When the communication apparatus 1500 is configured to perform the method 700 in the foregoing embodiment, the communication apparatus 1500 is equivalent to the first communication apparatus in the method 700. The transceiver 1530 is configured to perform a transceiver operation performed by the first communication apparatus in the method 700. The processor 1510 is configured to perform an operation other than the transceiver operation performed by the first communication apparatus in the method 700. For example, the transceiver 1530 is configured to receive a fifth packet. The processor 1510 is configured to: determine a third SRv6 SID based on the fifth packet, where the third SRv6 SID is an SRv6 SID of a fourth communication apparatus, the third SRv6 SID is an address in the first address segment, the fourth communication apparatus and the second communication apparatus belong to a same domain; determine first forwarding information of the first target path corresponding to the third SRv6 SID based on the third SRv6 SID; and encapsulate the fifth packet to obtain a sixth packet, where the packet header of the sixth packet includes the third SRv6 SID and the first forwarding information. The transceiver 1530 is further configured to send the sixth packet through the first target path.

This application further provides a computer-readable storage medium. The computer-readable storage medium stores instructions. When the instructions are run on a computer, the computer is enabled to perform any one or more operations in the method (for example, the method 100, the method 200, the method 300, the method 400, the method 500, the method 600, or the method 700) in the foregoing embodiments.

This application further provides a computer program product, including a computer program. When the computer program product runs on a computer, the computer is enabled to perform any one or more operations in the method (for example, the method 100, the method 200, the method 300, the method 400, the method 500, the method 600, or the method 700) in the foregoing embodiments.

This application further provides a communication system, including the first communication apparatus and the second communication apparatus described in the foregoing embodiments.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communications medium, where the communications medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing is merely specific implementations of the present invention.

The foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A route advertisement method, wherein the method comprises:
sending, by a second communication apparatus, a first border gateway protocol BGP message to a third communication apparatus, wherein the first BGP message comprises a first routing prefix, a first next-hop address, and a first color attribute, an address segment of the first routing prefix is a first address segment of the second communication apparatus, and the first color attribute indicates a first service intent; and
advertising, by the second communication apparatus, a first segment routing internet protocol version 6 SRv6 service route to a first communication apparatus, wherein the first SRv6 service route comprises a first SRv6 segment identifier SID of the second communication apparatus, the first SRv6 SID is an address in the first address segment, and the second communication apparatus and the first communication apparatus belong to different domains.

2. The method according to claim 1, wherein the first SRv6 service route is a first SRv6 virtual private network VPN route, and the first SRv6 SID is a first SRv6 VPN SID.

3. The method according to claim 1 or 2, wherein the method further comprises:
sending, by the second communication apparatus, a second BGP message to the third communication apparatus, wherein the second BGP message comprises a second routing prefix, a second next-hop address, and a second color attribute, an address segment of the second routing prefix is a second address segment of the second communication apparatus, and the second color attribute indicates a second service intent; and
advertising, by the second communication apparatus, a second SRv6 service route to the first communication apparatus, wherein the second SRv6 service route comprises a second SRv6 SID, and the second SRv6 SID is an address in the second address segment.

4. The method according to claim 3, wherein the second SRv6 service route is a second SRv6 VPN route, and the second SRv6 SID is a second SRv6 VPN SID.

5. The method according to claim 3 or 4, wherein a first SRv6 locator address segment of the second communication apparatus comprises a plurality of different address sub-segments, and the plurality of different address sub-segments comprise the first address segment and the second address segment.

6. The method according to claim 3 or 4, wherein the first address segment is a first SRv6 locator address segment of the second communication apparatus, and the second address segment is a second SRv6 locator address segment of the second communication apparatus.

7. The method according to claim 1 or 2, wherein an SRv6 locator address segment of the second communication apparatus comprises a plurality of different address sub-segments, and the plurality of different address sub-segments comprise the first address segment.

8. The method according to claim 1 or 2, wherein the first address segment is a first SRv6 locator address segment of the second communication apparatus.

9. The method according to any one of claims 1 to 8, wherein the first communication apparatus belongs to a first domain, both the second communication apparatus and the third communication apparatus belong to a second domain, and the first communication apparatus is connected to the second communication apparatus through the third communication apparatus.

10. A communication method, performed by a first communication apparatus, wherein the method comprises:
receiving a first border gateway protocol BGP message, wherein the first BGP message comprises a first routing prefix, a first next-hop address, and a first color attribute, an address segment of the first routing prefix is a first address segment of a second communication apparatus, and the first color attribute indicates a first service intent;
generating a first BGP route based on the first BGP message, wherein the first BGP route comprises the first routing prefix and the first next-hop address; and
iterating the first BGP route to a first target path based on the first color attribute and the first next-hop address, wherein the first target path is used to forward a packet that carries a first segment routing internet protocol version 6 SRv6 segment identifier SID of the second communication apparatus, and the first SRv6 SID is an address in the first address segment.

11. The method according to claim 10, wherein the first SRv6 SID is a first SRv6 virtual private network VPN SID.

12. The method according to claim 10, wherein the method further comprises:
receiving a first SRv6 service route, wherein the first SRv6 service route comprises the first SRv6 SID; and
iterating the first BGP route based on the first SRv6 SID, and obtaining first forwarding information of the first target path.

13. The method according to claim 10 or 11, wherein the method further comprises:
receiving first information sent by a controller, wherein the first information comprises the first SRv6 SID; and
iterating the first BGP route based on the first SRv6 SID, and obtaining first forwarding information of the first target path.

14. The method according to claim 13, wherein the first SRv6 SID is the first SRv6 VPN SID, the first SRv6 SID is a first SRv6 service service segment segment SID, or the first SRv6 SID is a first SRv6 binding binding SID.

15. The method according to any one of claims 10 to 14, wherein the method further comprises:
sending a second BGP message to a third communication apparatus, to advertise a second BGP route, wherein the second BGP message comprises the first routing prefix, a second next-hop address, and a second color attribute, the second next-hop address is an IP address of the first communication apparatus, and the second color attribute indicates the first service intent.

16. The method according to claim 15, wherein the second BGP message indicates the third communication apparatus to iterate the second BGP route to a second target path based on the second color attribute and the second next-hop address, and the second target path is used to forward a packet that carries the first SRv6 SID.

17. The method according to any one of claims 10 to 16, wherein the method further comprises:
receiving a third BGP message, wherein the third BGP message comprises a second routing prefix, a third next-hop address, and a third color attribute, an address segment of the second routing prefix is a second address segment of the second communication apparatus, and the third color attribute indicates a second service intent;
generating a third BGP route based on the third BGP message, wherein the third BGP route comprises the second routing prefix and the third next-hop address; and
iterating the third BGP route to a third target path based on the third color attribute and the third next-hop address, wherein the third target path is used to forward a packet that carries a second SRv6 SID of the second communication apparatus, and the second SRv6 SID is an address in the second address segment.

18. The method according to claim 17, wherein the second SRv6 SID is a second SRv6 VPN SID.

19. The method according to claim 18, wherein the method further comprises:
receiving a second SRv6 VPN route advertised by the second communication apparatus, wherein the second SRv6 VPN route comprises the second SRv6 VPN SID; and
iterating the third BGP route based on the second SRv6 VPN SID, and obtaining second forwarding information of the third target path.

20. The method according to claim 17 or 18, wherein the method further comprises:
receiving second information sent by the controller, wherein the second information comprises the second SRv6 SID; and
iterating the third BGP route based on the second SRv6 SID, and obtaining second forwarding information of the third target path.

21. The method according to claim 20, wherein the second SRv6 SID is the second SRv6 VPN SID, the second SRv6 SID is a second SRv6 service service segment segment SID, or the second SRv6 SID is a second SRv6 binding binding SID.

22. The method according to any one of claims 17 to 21, wherein the method further comprises:
sending a fourth BGP message to the third communication apparatus, to advertise a fourth BGP route, wherein the fourth BGP message comprises the second routing prefix, a fourth next-hop address, and a fourth color attribute, the fourth next-hop address is the IP address of the first communication apparatus, and the fourth color attribute indicates the second service intent.

23. The method according to claim 22, wherein the fourth BGP message indicates the third communication apparatus to iterate the fourth BGP route to a fourth target path based on the fourth color attribute and the fourth next-hop address, and the fourth target path is used to forward a packet that carries the second SRv6 SID.

24. The method according to any one of claims 17 to 23, wherein the address segment of the second routing prefix is an address segment allocated by the second communication apparatus based on the second service intent, and the second SRv6 SID is an SID allocated by the second communication apparatus based on the second service intent.

25. The method according to any one of claims 17 to 24, wherein a first SRv6 locator address segment of the second communication apparatus comprises a plurality of different address sub-segments, and the plurality of different address sub-segments comprise the first address segment and the second address segment.

26. The method according to any one of claims 17 to 24, wherein the first address segment is a first SRv6 locator address segment of the second communication apparatus, and the second address segment is a second SRv6 locator address segment of the second communication apparatus.

27. The method according to any one of claims 10 to 26, wherein the first target path is one of the following:
a segment routing SR internet protocol version 6 policy SRv6 policy;
a segment routing internet protocol version 6 flexible algorithm SRv6 flex-algo path;
a resource reservation protocol-traffic engineering RSVP-TE tunnel;
a segment routing multi-protocol label switching policy SR MPLS policy;
an SR flex-algo path;
a virtual extensible local area network VxLAN tunnel; or
a multi-protocol label switching-traffic engineering MPLS-TE tunnel.

28. The method according to any one of claims 10 to 27, wherein the address segment of the first routing prefix is an address segment allocated by the second communication apparatus based on the first service intent, and the first SRv6 SID is a SID allocated by the second communication apparatus based on the first service intent.

29. The method according to any one of claims 10 to 28, wherein an SRv6 locator address segment of the second communication apparatus comprises a plurality of different address sub-segments, and the plurality of different address sub-segments comprise the first address segment.

30. The method according to any one of claims 10 to 28, wherein the first address segment is the first SRv6 locator address segment of the second communication apparatus.

31. The method according to any one of claims 10 to 30, wherein the method further comprises:
receiving a first packet;
determining the first SRv6 SID based on the first packet;
determining the first forwarding information of the first target path based on the first SRv6 SID;
obtaining a second packet based on the first packet, wherein a packet header of the second packet comprises the first SRv6 SID and the first forwarding information; and
sending the second packet through the first target path.

32. The method according to claim 31, wherein the first SRv6 SID is the first SRv6 VPN SID, and the determining the first segment routing internet protocol version 6 segment identifier SRv6 SID based on the first packet comprises:
searching a first virtual routing and forwarding VRF table based on a destination address of the first packet, to determine the first SRv6 VPN SID.

33. The method according to claim 31, wherein a destination address of the first packet is the first SRv6 SID.

34. The method according to any one of claims 17 to 26, wherein the method further comprises:
receiving a third packet;
determining the second SRv6 SID based on the third packet;
determining the second forwarding information of the third target path corresponding to the second SRv6 SID based on the second SRv6 SID;
obtaining a fourth packet based on the third packet, wherein a packet header of the fourth packet comprises the second SRv6 SID and the second forwarding information; and
sending the fourth packet to the second communication apparatus through the third target path.

35. The method according to claim 34, wherein the second SRv6 SID is the second SRv6 VPN SID, and the determining the second SRv6 SID based on the third packet comprises:
searching a second virtual routing and forwarding VRF table based on a destination address of the third packet, to determine the second SRv6 VPN SID.

36. The method according to claim 34, wherein a destination address of the third packet is the second SRv6 SID.

37. The method according to any one of claims 10 to 14, wherein the first communication apparatus belongs to a first domain, the second communication apparatus belongs to a second domain, the first communication apparatus is connected to the second communication apparatus through a third communication apparatus, and the first communication apparatus and the third communication apparatus are respectively a head node and an egress node of the first target path.

38. The method according to claim 37, wherein the method further comprises:
receiving a fifth packet;
determining the third SRv6 SID based on the fifth packet, wherein the third SRv6 SID is an SRv6 SID of a fourth communication apparatus, the third SRv6 SID is an address in the first address segment, and the fourth communication apparatus and the second communication apparatus belong to a same domain;
determining the first forwarding information of the first target path corresponding to the third SRv6 SID based on the third SRv6 SID;
obtaining a sixth packet based on the fifth packet, wherein a packet header of the sixth packet comprises the third SRv6 SID and the first forwarding information; and
sending the sixth packet through the first target path.

39. A second communication apparatus, wherein the apparatus comprises:
a transceiver unit and a processing unit, wherein
the transceiver unit is configured to perform a receiving operation and/or a sending operation performed by the second communication apparatus according to any one of claims 1 to 9; and
the processing unit is configured to perform an operation other than the receiving operation and/or the sending operation performed by the second communication apparatus according to any one of claims 1 to 9.

40. A first communication apparatus, wherein the apparatus comprises:
a transceiver unit and a processing unit, wherein
the transceiver unit is configured to perform a receiving operation and/or a sending operation performed by the first communication apparatus according to any one of claims 10 to 38; and
the processing unit is configured to perform an operation other than the receiving operation and/or the sending operation performed by the first communication apparatus according to any one of claims 10 to 38.

41. A communication apparatus, comprising a processor and a memory, wherein
the memory is configured to store instructions; and
the processor is configured to execute the instructions, so that the communication apparatus performs the method according to any one of claims 1 to 38.

42. A computer program product, comprising a computer program, wherein when the computer program product runs on a processor, the method according to any one of claims 1 to 38 is performed.

43. A communication system, wherein the communication system comprises:
a second communication apparatus that performs the method according to any one of claims 1 to 9 and a first communication apparatus that performs the method according to any one of claims 10 to 38.
